# EUROPEAN PATENT SPECIFICATION

(11) **EP 2 843 459 B1**
(45) Date of publication and mention of the grant of the patent: **29.08.2018**
(21) Application number: 13780627.9
(22) Date of filing: 24.04.2013
(51) Int. Cl.: G02B 21/00, G02B 21/06, G02B 21/16, G02B 21/24, G02B 21/36

(54) **MICROSCOPE DEVICE WITH A PLURALITY OF SHUTTERS**
MIKROSKOPVORRICHTUNG MIT MEHREREN BLENDEN
DISPOSITIF DE MICROSCOPE AVEC PLUSIEURS OBTURATEURS

(30) Priority: 27.04.2012 JP 2012103967
(43) Date of publication of application: 04.03.2015
(73) Proprietor: Olympus Corporation, Tokyo 192-8507 (JP)
(72) Inventor: ISHII, Yasuko, Hachioji-shi, Tokyo 192-8507 (JP); KANEKI, Shinsuke, Hachioji-shi, Tokyo 192-8507 (JP); ABE, Masaya, Hachioji-shi, Tokyo 192-8507 (JP); IMAZEKI, Koji, Hachioji-shi, Tokyo 192-8507 (JP)
(74) Representative: Schicker, Silvia
(86) International application number: PCT/JP2013/062111
(87) International publication number: WO 2013/161899

(56) References cited:
- JP-A- 2004 109 374
- JP-A- 2004 109 374
- JP-A- 2010 152 397
- JP-A- 2010 152 397
- JP-A- 2011 013 609
- JP-A- 2011 013 609
- JP-A- 2011 257 599
- JP-A- 2011 257 599
- US-A1- 2004 080 817
- US-A1- 2011 306 149

## Description

### Field

The present invention relates to a microscope apparatus having a plurality of optical units of the same type. A method of controlling an electrically driven optical unit of the microscope apparatus is disclosed.

### Background

Presently, microscope apparatuses, which enable observation of a micro sample by magnification and is able to record observed images as photographs or video images, are used in a wide range of fields, such as biological fields and industrial fields. In the biological fields, such a microscope apparatus is used, for example, in observation of a biological specimen, such as a biological cell or cell piece and in time lapse observation in combination with a culturing apparatus for culturing a cell.

Since microscope apparatuses are used in the above mentioned various fields, each part thereof is often unitized, and according to combinations of plural units, microscope apparatuses are able to be used for various purposes.

Conventionally, a microscope system has been disclosed, which includes a display content changing means for displaying operating icons only for units that connected to a microscope main body thereof, without including controllers independently provided for respective connection units in a microscope apparatus thereof, to and from which various microscopy units and image capturing units are attachable and detachable (for example, see Patent Literature 1).

Further, a microscope apparatus has been disclosed that controls a lamp output, a field stop, and an aperture stop in such a way that optimum illumination light, illumination light's irradiation range, and specimen's contrast can be achieved when switching between microscopies (for example, see Patent Literature 2).

Patent Literature 3 discloses an electric optic microscope in which allocation information indicative of optical elements corresponding to various kinds of observation methods allocated to respective operation buttons and their arrangement states is stored in a non-volatile memory, the allocation information allocated to the manipulated operation button is read from the non-volatile memory, and the optical elements are arranged in respective optical paths of an observation optical system and an illumination optical system in accordance with the allocation information.

Patent Literature 4 discloses an observation apparatus capable of changing the stimulation position in accordance with the position and the shape of a cell and of observing the cell immediately after stimulation.

### Citation List

### Patent Literature

Patent Literature 1: Japanese Patent Application Laid-open No. H07-199077
Patent Literature 2: Japanese Patent Application Laid-open No. H08-211295
Patent Literature 3: Japanese Patent Application No. 2004 109374 A
Patent Literature 4: US Patent Application No. 2011/306149 A1

### Summary

### Technical Problem

However, according to Patent Literature 1, when a plurality of optical units are connected to the microscope apparatus, although input by a single controller becomes possible, even if an optimum position of each optical unit during observation has been determined, an operation instruction must be input for each optical unit, making manipulation thereof complicated.

Further, according to Patent Literature 2, different optical units are operated in conjunction with one another by an input operation for switching between microscopies. However, Patent Literature 2 does not disclose that optical units of the same type are operated in conjunction with one another, and therefore an operation instruction for the optical units of the same type needs to be input in consideration of the microscopies.

The present invention has been made in view of the above, and an object of the invention is to provide a
microscope apparatus for controlling an electrically driven optical unit of the microscope apparatus, which enable correct observation by simple manipulation in the microscope apparatus which has a plurality of optical units of at least the same type.

### Solution to Problem

To solve the above-mentioned problem and achieve the object, a microscope apparatus according to the invention is a microscope apparatus having the features of claim 1. A microscope apparatus may include: an input unit configured to receive inputs of operation instructions for the electrically driven optical units; a storage unit that stores operation conditions of the electrically driven optical units corresponding to one operation instruction for the electrically driven optical unit by the input unit; an operation controller that controls operations of the electrically driven optical units; and a controller configured to acquire, from the storage unit, the operation conditions corresponding to the one operation instruction for the electrically driven optical unit by the input unit, and to output, based on the acquired operation conditions, control signals that cause the electrically driven optical units to operate in conjunction with one another, to the operation controller.

In a microscope apparatus the electrically driven optical units may be a plurality of shutters arranged on an optical path on which illumination light from one light source is incident. The operation instruction is a signal for instructing to perform opening or closing operation of the shutters. The storage unit stores operation conditions that cause the plurality of
shutters to open when an operation instruction to open the shutters is input and cause the plurality of shutters to close when an operation instruction to close the shutters is input.

In a microscope apparatus the electrically driven optical units may be: a plurality of cube turrets arranged on the same observation optical path; and a plurality of shutters that switch between irradiation with illumination light from an individual light source with respect to each cube turret and blocking of the illumination light. The operation instruction is a signal for instructing to insert, onto an observation optical path, a selected cube of cubes held by the cube turret. The storage unit stores operation conditions to cause a shutter for irradiating a cube turret that holds a selected cube with irradiation light to open and to cause a shutter for irradiating a cube turret that holds a non-selected cube with the irradiation light to close.

In a microscope apparatus the operation conditions may cause a shutter for irradiating a cube turret that holds a selected cube with irradiation light to open, a shutter for irradiating a cube turret that holds a non-selected cube with the irradiation light to close, and a selected cube to be inserted onto the observation optical path.

In a microscope apparatus the electrically driven optical units may be a plurality of shutters arranged on an optical path on which illumination light from one light source is incident. A selection instruction that makes a selection among the plurality of
shutters is input by the input unit. The storage unit stores operation conditions to cause a shutter selected by the selection instruction to close and a non-selected shutter to open.

In a microscope apparatus the operation instruction may be a signal instructing an operation to open or close the shutter. The operation conditions cause a selected shutter to close, a non-selected shutter to open, and only the selected shutter to be operated by the operation instruction.

In a microscope apparatus the electrically driven optical units may be: a cube turret arranged on an observation optical path; and a plurality of shutters that switch between irradiation with illumination light from a light source with respect to the cube turret and blocking of the illumination light.. A selection instruction for selecting a cube held by the cube turret is input by the input unit. The storage unit stores operation conditions that cause the plurality of shutters to close in conjunction with one another, a selected cube to be arranged on the observation optical path, and the plurality of shutters to open.

In a microscope apparatus the electrically driven optical units may be: a plurality of shutters arranged on an optical path on which illumination light from one epi-illumination light source is incident; and a shutter that switches between irradiation with illumination light from a transmitted light source and blocking of the illumination light. A selection instruction for selecting a microscopy is input by the input unit. The storage unit stores operation conditions of the plurality of shutters for microscopies selectable by the selection instruction.

In a microscope apparatus the electrically driven optical units may be: a plurality of cube turrets arranged on the same observation optical path; and a plurality of shutters that switch between irradiation with illumination light from an individual light source with respect to each cube turret and blocking of the illumination light. A selection instruction for selecting the light source is input by the input unit. The storage unit stores operation conditions that cause a plurality of shutters arranged on an optical path of the light source selected by the selection instruction to open in conjunction with one another, and a plurality of shutters arranged on an optical path of a non-selected light source to close in conjunction with one another.

In a microscope apparatus the operation instruction may be a signal instructing an operation to cause the shutter to open or close. The operation conditions cause a plurality of shutters arranged on an optical path of the selected light source to open in conjunction with another, a plurality of shutters arranged on an optical path of a non-selected light source to close in conjunction with one another, and only a plurality of shutters arranged on an optical path of the light source selected by the operation instruction to be operated.

In a microscope apparatus the electrically driven optical units may be: a plurality of cube turrets arranged on the same observation optical path; and
a plurality of shutters that switch between irradiation with illumination light from an individual light source with respect to each cube turret and blocking of the illumination light. A selection instruction for selecting a shutter on an optical path of each of the light sources is input by the input unit. The storage unit stores operation conditions to cause the shutter selected by the selection instruction to close and a non-selected shutter to open.

In a microscope apparatus the operation and selection instructions may be signals for instructing to select the light source and to operate a selected shutter on the selected light source. The operation conditions cause a selected shutter of each light source to close, a non-selected shutter to open, and if the selection instruction for the light source is input, cause a selected shutter of the selected light source to open, and if the operation instruction for the shutter is input, cause only a selected shutter of the selected light source to be operated.

According to the microscope apparatus of the invention, in the above-described invention, the electrically driven optical units are a plurality of shutters arranged on an optical path on which illumination light from one light source is incident. The operation controller stores parameters that respectively control the plurality of shutters and are related to operations of the respective shutters. The controller refers to the parameters related to the respective shutters and selects a shutter to be controlled, from the plurality of shutters.

A method of controlling electrically driven optical units of a microscope apparatus is a method of controlling electrically driven optical units of a microscope apparatus having a plurality of electrically driven optical units, a part of which has a same type. The method may include: an inputting step of receiving inputs of operation instructions for the electrically driven optical units; an acquiring step of acquiring, from a storage unit, operation conditions of the plurality of electrically driven optical units corresponding to the operation instruction input in the inputting step; an outputting step of outputting, based on the operations conditions acquired in the acquiring step, to an operation controller, control signals for the plurality of electrically driven optical units; and an operation controlling step of controlling, by the operation controller, the plurality of electrically driven optical units in conjunction with one another, based on the control signals output in the outputting step. Advantageous Effects of Invention

According to the invention, when a plurality of electrically driven optical units of the same type is connected, it is possible to reduce time and effort required for a user to select and input an optimum operation for every electrically driven optical unit, and to improve operability for the user.

### Brief Description of Drawings

FIG. 1 is a diagram illustrating a schematic configuration of a microscope apparatus according to a first comparative example.
FIG. 2 is a flow chart illustrating a sequence of operations upon initiation of the microscope apparatus according to the first comparative example.
FIG. 3 is a flow chart illustrating a sequence of operations of a plurality of shutters according to the first comparative example.
FIG. 4 is a diagram illustrating an example of a table of operation conditions stored in a storage unit according to the first comparative example.
FIG. 5 is a diagram illustrating a schematic configuration of a microscope apparatus according to a modified example 1-1 of the first comparative example.
FIG. 6 is a diagram illustrating an example of a table of operation conditions stored in a storage unit according to the modified example 1-1 of the first comparative example.
FIG. 7 is a diagram illustrating a schematic configuration of a microscope apparatus according to a second comparative example.
FIG. 8 is a schematic diagram of a cube turret as viewed from above, which is used in the microscope apparatus according to the second comparative example.
FIG. 9 is a flow chart illustrating a sequence of operations of a plurality of cube turrets and shutters according to the second comparative example.
FIG. 10 is a diagram illustrating an example of a table of operation conditions stored in a storage unit according to the second comparative example.
FIG. 11 is a flow chart illustrating a sequence of operations for a selection among a plurality of shutters according to a third comparative example.
FIG. 12 is a diagram illustrating an example of a table of operation conditions stored in a storage unit according to the third comparative example.
FIG. 13 is a diagram illustrating an example of operational states of each shutter upon shutter selection and input according to the third comparative example.
FIG. 14 is a flow chart illustrating a sequence of operations of a plurality of shutters according to the third comparative example.
FIG. 15 is a flow chart illustrating a sequence of operations of a plurality of shutters and cube turrets according to a fourth comparative example.
FIG. 16 is a diagram illustrating a schematic configuration of a microscope apparatus according to a fifth comparative example.
FIG. 17 is a flow chart illustrating a sequence of operations of a plurality of shutters according to the fifth comparative example.
FIG. 18 is a diagram illustrating an example of a table of operation conditions stored in a storage unit according to the fifth comparative example.
FIG. 19 is a diagram illustrating a schematic configuration of a microscope apparatus according to a sixth comparative example.
FIG. 20 is a flow chart illustrating a sequence of operations of a plurality of shutters according to the sixth comparative example.
FIG. 21 is a diagram illustrating an example of a table of operation conditions stored in a storage unit according to the sixth comparative example.
FIG. 22 is a diagram illustrating an example of a table of operation conditions stored in the storage unit according to the sixth comparative example.
FIG. 23 is a flow chart illustrating a sequence of operations for selecting a shutter according to a seventh comparative example.
FIG. 24 is a diagram illustrating an example of a table of operation conditions stored in a storage unit according to the seventh comparative example.
FIG. 25 is a flow chart illustrating a sequence of operations for selecting a shutter according to the seventh comparative example.
FIG. 26 is a diagram illustrating an example of a table of operation conditions stored in the storage unit according to the seventh comparative example.
FIG. 27 is a flow chart illustrating a sequence of operations of shutters according to the seventh comparative example.
FIG. 28 is a diagram illustrating an example of operational states of each shutter upon optical path selection and input according to the seventh comparative example
FIG. 29 is a flow chart illustrating a sequence of operations of a selected shutter according to the seventh comparative example.
FIG. 30 is a diagram illustrating an example of a table of operation conditions stored in the storage unit according to the seventh comparative example.
FIG. 31 is a diagram illustrating a schematic configuration of a microscope apparatus according to an embodiment of the present invention.
FIG. 32 is a flow chart illustrating a sequence of operations of a plurality of shutters according to the embodiment of the present invention.
FIG. 33 is a diagram illustrating an example of a table of operation conditions stored in a storage unit
   according to the embodiment of the present invention.
FIG. 34 is a flow chart illustrating a sequence of operations of shutters according to the embodiment of the present invention.
FIG. 35 is a diagram illustrating an example of operational states of each shutter upon input of shutter operations according to the embodiment of the present invention.
FIG. 36 is a diagram illustrating a schematic configuration of a microscope apparatus according to a modified example 8-1 of the embodiment of the present invention.
FIG. 37 is a flow chart illustrating a sequence of selecting a high speed shutter according to the modified example 8-1 of the embodiment of the present invention.
FIG. 38 is a diagram illustrating an example of a table of operation conditions stored in a storage unit according to the modified example 8-1 of the embodiment of the present invention.
FIG. 39 is a diagram illustrating an example of a table of operation conditions stored in the storage unit according to the modified example 8-1 of the embodiment of the present invention.
FIG. 40 is a flow chart illustrating a sequence of operations of a plurality of shutters according to the modified example 8-1 of the embodiment of the present invention.
FIG. 41 is a diagram illustrating an example of operational states of each shutter upon optical path selection and input according to the modified example 8-1 of the embodiment of the present invention.
FIG. 42 is a flow chart illustrating a sequence of
   operations of a high speed shutter according to the modified example 8-1 of the embodiment of the present invention.
FIG. 43 is a diagram illustrating an example of operational states of each shutter upon input of operations according to the modified example 8-1 of the embodiment of the present invention.
The comparative examples described below with reference to Figs. 1 to 30 only represent background that is useful for understanding the present invention, but do not form part of the same.

### Description of an Embodiment

An embodiment of a microscope apparatus according to the present invention will be described below in detail, based on the drawings. The present invention is not limited by this embodiment and various changes may be made without departing from the scope of the present invention.

### (First comparative example)

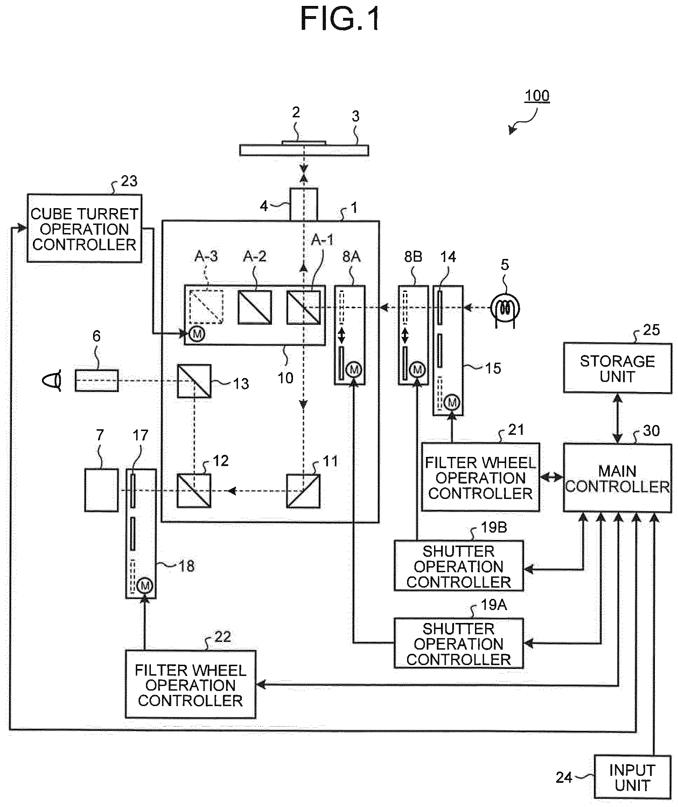

FIG. 1 is a diagram illustrating a schematic configuration of a microscope apparatus according to a first comparative example. A microscope apparatus 100 includes: a microscope main body unit 1; a stage 3 on which a sample 2 is placed; an objective lens 4 arranged below the sample 2; a light source 5 that irradiates the sample 2 with light; an eyepiece 6 for observing light reflected from the sample 2; and an imaging element 7 that images the light reflected from the sample 2.

In the microscope main body unit 1: a shutter 8A that switches between irradiation of the sample 2 with light emitted from the light source 5 and blocking of the light; a cube turret 10 having therein built-in optical elements, such as a fluorescent cube and a mirror; a mirror 11 that reflects the light reflected from the sample 2 towards the imaging element 7; a beam splitter 12 that splits the light reflected from the mirror 11; and a mirror
13 that reflects the light split by the beam splitter 12 to the eyepiece 6, are arranged as appropriate.

Further, in the microscope apparatus 100: a filter wheel 15 having therein a plurality of built-in excitation filters 14, and a shutter 8B synchronized with the filter wheel 15 are connected on an optical path of the light emitted from the light source 5; and a filter wheel 18 having therein a plurality of built-in absorption filters 17 is arranged on an observation optical path. The filter wheel 18 also operates in synchronization with the filter wheel 15. In the first comparative example, the shutter 8A is built in the microscope apparatus 100, the shutter 8B is a unit externally attached together with the filter wheel 15, and an operational speed of the shutter 8B is set to be faster than the shutter 8A.

The shutter 8A and shutter 8B are connected to a main controller 30 via a shutter operation controller 19A and a shutter operation controller 19B. The shutter operation controller 19A and shutter operation controller 19B control, based on control signals transmitted from the main controller 30, motors to open or close the shutter 8A and shutter 8B respectively.

The filter wheel 15 and filter wheel 18 are connected to the main controller 30 via a filter wheel operation controller 21 and a filter wheel operation controller 22. The filter wheel operation controller 21 and filter wheel operation controller 22 control, based on control signals transmitted from the main controller 30, motors to operate the filter wheel 15 and filter wheel 18 respectively.

The cube turret 10 is connected to the main controller 30 via a cube turret operation controller 23. Based on a control signal transmitted from the main controller 30, the cube turret operation controller 23 operates the cube turret 10 and controls a motor to insert a cube onto the observation optical path.

An input unit 24 receives an operation instruction, that is, an open or close instruction, for a shutter (shutter 8A or shutter 8B) from a user.

A storage unit 25 stores operation conditions of the shutter 8A and shutter 8B corresponding to operation instructions for a shutter (shutter 8A or shutter 8B) input by the input unit 24.

The main controller 30 is connected to each unit of the microscope apparatus 100 and transmits control signals that control operations of each unit. Further, the main controller 30 acquires, from the storage unit 25, the operation conditions corresponding to the operation instruction for the shutter 8A or shutter 8B input by the user via the input unit 24, and based on the acquired operation conditions, outputs control signals for operating the shutter 8A and shutter 8B in conjunction with each other, to the shutter operation controller 19A and shutter operation controller 19B, respectively.

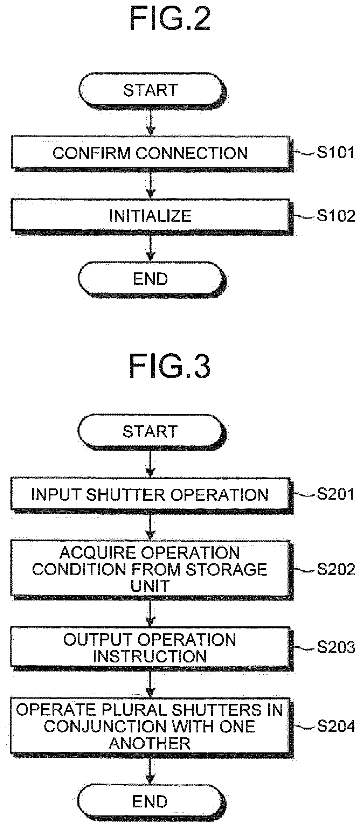

Next, with reference to the drawings, a sequence of operations of the microscope apparatus 100 upon its initiation according to the first comparative example will be described. FIG. 2 is a flow chart illustrating the sequence of the operations of the microscope apparatus upon its initiation according to the first comparative example.

As illustrated in FIG. 2, when power of the microscope apparatus 100 is turned ON, first, the main controller 30 confirms, with the shutter operation controller 19A and shutter operation controller 19B, connection of the shutter 8A and shutter 8B (step S101).

Thereafter, initialization of the shutter 8A and shutter 8B is performed (S102). By this initialization, the shutter 8A and shutter 8B are moved to their initial position. If, for example, the shutter 8A and shutter 8B are set to be open as their initial position, the main controller 30 transmits control signals of the initial position to the shutter operation controller 19A and shutter operation controller 19B. Thereby, the shutter 8A and shutter 8B are opened. The initial position may be a position that is determined beforehand, or a position upon the last time's very last usage may be the initial position. Further, the initial position may be defined as having all of the shutters closed.

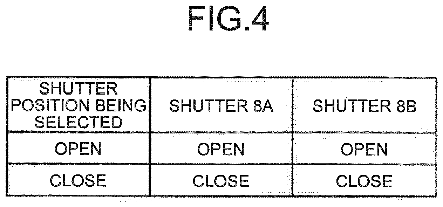

Subsequently, a sequence of operations of the shutter 8A and shutter 8B according to the first comparative example will be described with reference to the drawings. FIG. 3 is a flow chart illustrating the sequence of the operations of the shutter 8A and shutter 8B according to the first comparative example. FIG. 4 is a diagram illustrating an example of a table of operation conditions stored in the storage unit 25 according to the first comparative example.

The user inputs an operation of a shutter via the input unit 24 (step S201). The input unit 24 has a selector, such as a button or switch, which opens or closes the shutter (shutter 8A or shutter 8B) and the user inputs the operation of the shutter by the selector.

The main controller 30 acquires the operation conditions for an operation instruction of the shutter 8A or shutter 8B from the user by the input unit 24 (step S202). For example, the table of the operation conditions as illustrated in FIG. 4 is stored in the storage unit 25 and if the user selects "open", the shutter 8A and shutter 8B
are to be opened and if the user selects "close", the shutter 8A and shutter 8B are to be closed.

After acquiring the operation conditions, the main controller 30 outputs, based on the acquired operation conditions, control signals (operation instructions) for operations of the shutter 8A and shutter 8B to the shutter operation controller 19A and shutter operation controller 19B respectively (step S203). For example, if "close" is selected and input as the operation, the main controller 30 outputs control signals to close the shutter 8A and shutter 8B to the shutter operation controller 19A and shutter operation controller 19B respectively.

The shutter operation controller 19A and shutter operation controller 19B control, based on the received control signals, motors to operate the shutter 8A and shutter 8B (step S204). Thereby, by a single operation input by the user, the shutter 8A and shutter 8B are operated in conjunction with each other. In this specification, "in conjunction with" includes a case of simultaneous operation as well as a case of sequential operation.

The first comparative example has the effect of, even if the two shutters 8A and 8B are arranged on the same optical path, on which the irradiation light emitted from the one light source 5 is incident, by a single operation input process: allowing release or shut-off of the optical path; allowing complicated manipulation to be omitted, the complicated manipulation including determining a position where the shutter 8A and shutter 8B do not hinder observation between each other and individually inputting operations of the shutters; and allowing contribution to improvement of operability for a user.

In the first comparative example, although a case in which
the two shutters 8A and 8B are arranged on the same optical path has been described as an example, as long as there are two or more, even if three or more shutters are connected, similarly by a single operation, the three or more shutters are able to be manipulated in conjunction with one another and time and effort required for the manipulation are able to be reduced.

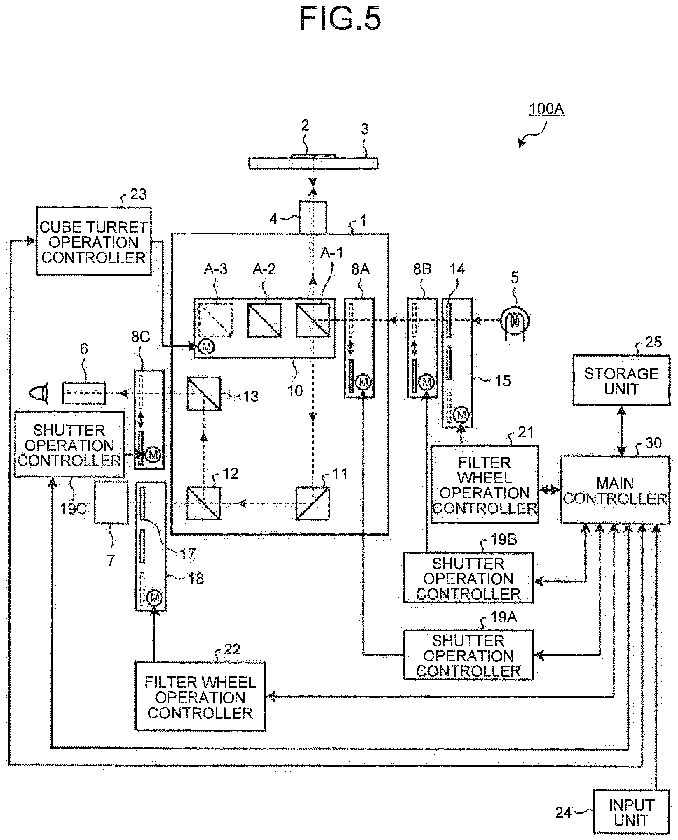

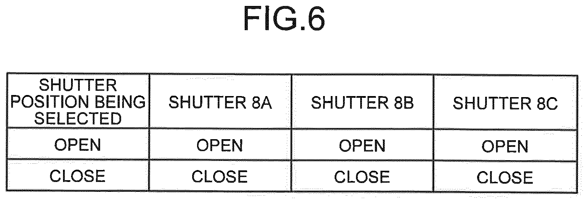

Further, as a modified example 1-1 of the first comparative example, a microscope apparatus can be exemplified which causes a shutter for irradiating the eyepiece 6 with reflected light or shutting off the reflected light to operate in conjunction with another shutter. FIG. 5 is a diagram illustrating a schematic configuration of a microscope apparatus according to the modified example 1-1 of the first comparative example. FIG. 6 is a diagram illustrating an example of a table of operation conditions stored in a storage unit according to the modified example 1-1 of the first comparative example.

As illustrated in FIG. 5, a microscope apparatus 100A according to the modified example 1-1 is different from the microscope apparatus 100 of the first comparative example in that the microscope apparatus 100A includes a shutter 8C that switches between irradiation of the eyepiece 6 with reflected light or blocking of the reflected light and a shutter operation controller 19C that controls operation of the shutter 8C.

In the storage unit 25 of the microscope apparatus 100A, a table of operations conditions as illustrated in FIG. 6 is stored, and when a user selects and inputs "open" by the input unit 24, the shutter 8A and shutter 8B, as well as the shutter 8C are to be opened and when the user selects "close", the shutter 8A and shutter
8B, as well as the shutter 8C are to be closed.

According to the modified example 1-1, not only for the plurality of shutters arranged on the same optical path but also for the shutter arranged on the eyepiece side, the plural shutters are able to be operated in conjunction with one another by a single operation input.

### (Second comparative example)

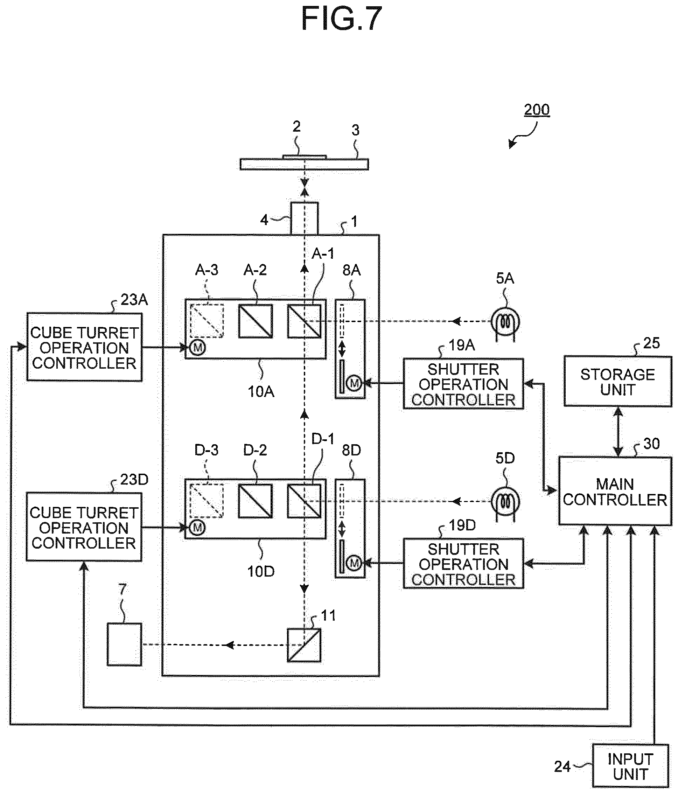

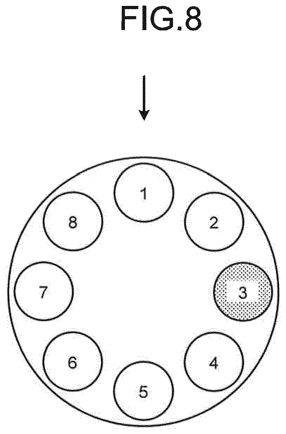

A microscope apparatus according to a second comparative example is different from that of the first comparative example in that a plurality of cube turrets are arranged on the same observation optical path, shutters that switch between irradiation with irradiation light from individual light sources with respect to the cube turrets and blocking of the irradiation light are respectively arranged, and the plurality of cube turrets and the plurality of shutters are operated in conjunction with one another by a single operation instruction. FIG. 7 is a diagram illustrating a schematic configuration of the microscope apparatus according to the second comparative example. FIG. 8 is a schematic diagram of a cube turret as viewed from above, which is used in the microscope apparatus according to the second comparative example.

As illustrated in FIG. 7, in a microscope apparatus 200 according to the second comparative example, two cube turrets 10A and 10D are arranged on an optical path (observation optical path), which observation light emitted from the sample 2 by the irradiation light to the sample 2 passes. The cube turret 10A and cube turret 10D are connected to the main controller 30 via a cube turret operation controller 23A and a cube turret operation controller 23D.

Illumination light from a light source 5A is incident on the cube turret 10A and the shutter 8A, which
switches between irradiation with the illumination light and blocking of the illumination light, is arranged on an optical path of the illumination light from the light source 5A. Further, illumination light from a light source 5D is incident on the cube turret 10D, and a shutter 8D, which switches between irradiation with the illumination light and blocking of the illumination light, is arranged on an optical path of the illumination light from the light source 5D. The shutter 8A and shutter 8D are connected to the main controller 30 via the shutter operation controller 19A and a shutter operation controller 19D.

The cube turrets 10A and 10D are, as illustrated in FIG. 8, able to hold eight cubes, and in order not to hinder observation of the selected cube, one of them is an empty hole. In FIG. 8, a position number 3, which is hatched, is the empty hole and the selected cube is arranged at the position indicated by an arrow. For example, if a position number 4 of the cube turret 10A is selected, the cube turret 10A is rotated such that a cube at the position number 4 is arranged at the position of the arrow and the cube turret 10D is rotated such that the position number 3, which is the empty hole", is arranged at the position of the arrow.

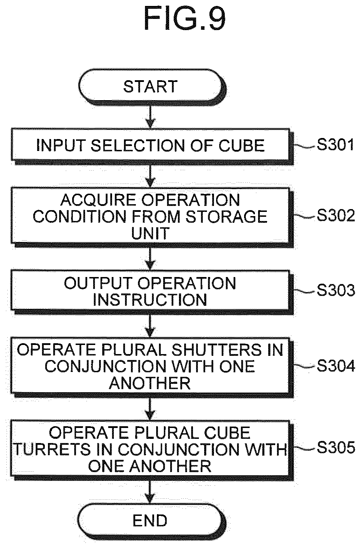

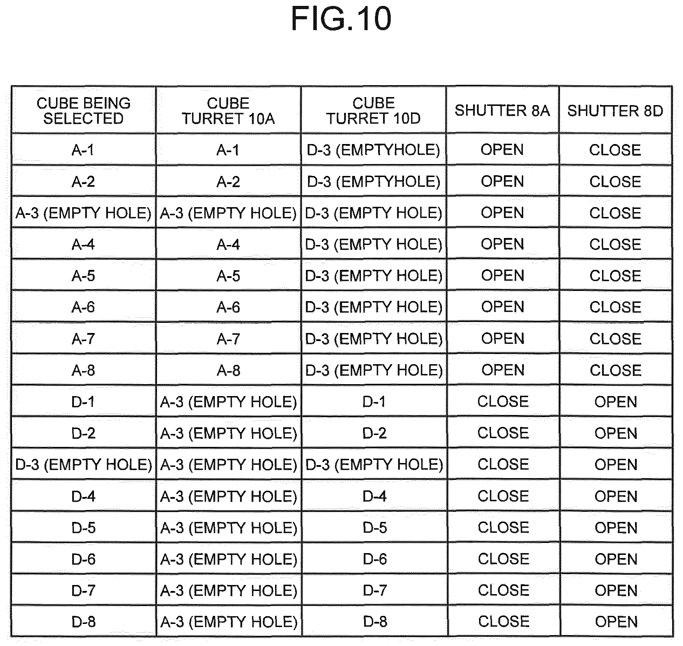

Subsequently, a sequence of operations of the cube turrets 10A and 10D according to the second comparative example will be described with reference to the drawings. FIG. 9 is a flow chart illustrating a sequence of operations of the plurality of cube turrets and shutters according to the second comparative example. FIG. 10 is a diagram illustrating an example of a table of operation conditions stored in a storage unit according to the second comparative example.

As to operations of the microscope apparatus 200
upon its initiation, similarly to the above described flow chart illustrated in FIG. 2, shutter and cube turret connection confirmation and shutter and cube turret initiation are performed. By the initiation, the cube turret 10A and cube turret 10D, as well as the shutter 8A and shutter 8D are moved to their initial position. If, as the initial position, for example, a cube A-1 is set for the cube turret 10A and a cube D-3 (empty hole) is set for the cube turret 10D, the main controller 30 transmits control signals of the initial position to the cube turret operation controller 23A and cube turret operation controller 23D and transmits control signals to open the shutter 8A and to close the shutter 8B to the shutter operation controller 19A and shutter operation controller 19D. Thereby, the cube turret 10A inserts the cube A-1 and the cube turret 10D inserts the cube D-3 (empty hole) on the observation optical path and the shutter 8A is opened and the shutter 8B is closed. The initial position may be a position that is determined beforehand, or may be a position upon the last time's very last usage. Further, the initial position may be defined as having all of the shutters closed.

A user inputs a selection of a cube via the input unit 24 (step S301). The input unit 24 has a selector, such as buttons or switches to select cubes A-1, A-2, ..., and A-8, and D-1, D-2, ..., and D-8 held by the cube turret 10A and cube turret 10D and the user inputs a cube selection via the selector.

The main controller 30 acquires, from the storage unit 25, operation conditions corresponding to the user's cube selection instruction by the input unit 24 (step S302). For example, in the storage unit 25, a table of operation conditions as illustrated in FIG. 10 is stored, and for example, if the user selects the cube D-5, the operation conditions, for the cube turret 10A is "cube A-3" (empty hole), for the cube turret 10D is "cube D-5", for the shutter 8A is "close", and for the shutter 8D is "open".

After acquiring the operation conditions, the main controller 30 outputs, based on the acquired operation conditions, control signals for operations of the cube turret 10A and cube turret 10D as well as the shutter 8A and shutter 8D to the cube turret operation controller 23A and cube turret operation controller 23D, as well as the shutter operation controller 19A and shutter operation controller 19D, respectively (step S303).

Based on the received control signals, the shutter operation controller 19A and shutter operation controller 19D control motors to operate the shutter 8A and shutter 8D (step S304).

Thereafter, the cube turret operation controller 23A and cube turret operation controller 23D control motors to operate the cute turret 10A and cube turret 10D, based on the received control signals (step S305). As above, by the single cube selection input by the user, the cube turret 10A and cube turret 10D, as well as the shutter 8A and shutter 8D are operated in conjunction with one another.

The second comparative example has the effect of, even if two cube turrets are connected on the same observation optical path, by a single cube selection input process: allowing two cube turrets and two shutters to be operated in conjunction with one another and operated to positions at which correct observation is possible; allowing complicated manipulation to be omitted, the complicated manipulation including determining a position where the two cube turrets and two shutters do not hinder observation among one another and inputting operations of respective
cube turrets and respective shutters; and allowing operability for a user to be greatly improved.

In the second comparative example, a case in which the two cube turrets 10A and 10D are arranged on the same observation optical path has been described as an example, but as long as there are two or more, also in a case in which three or more cube turrets are connected, similarly, by a single operation, the three or more cube turrets and shutters are able to be manipulated in conjunction with one another and time and effort required for the manipulation are able to be reduced.

### (Third comparative example)

A microscope apparatus according to a third comparative example has the same configuration as that of the microscope apparatus 100 according to the first comparative example of FIG. 1 in that two shutters are connected on an optical path, on which illumination light emitted from one light source is incident, but is different from the first comparative example in that if a user selects a shutter to be used, the selected shutter is operated to open or close and all of the non-selected shutters are operated to open.

In the third comparative example, the input unit 24 has a selector, such as buttons or switches, to select the shutter 8A and shutter 8B, and a user selects and inputs the shutter 8A or shutter 8B to be used, by using the selector. Further, the input unit 24 has a selector, such as buttons or switches, to open or close the shutter 8A and shutter 8B, and enables input of an operation to open or close the shutter 8A or shutter 8B selected by the user via the selector. Furthermore, the shutters not being selected are opened.

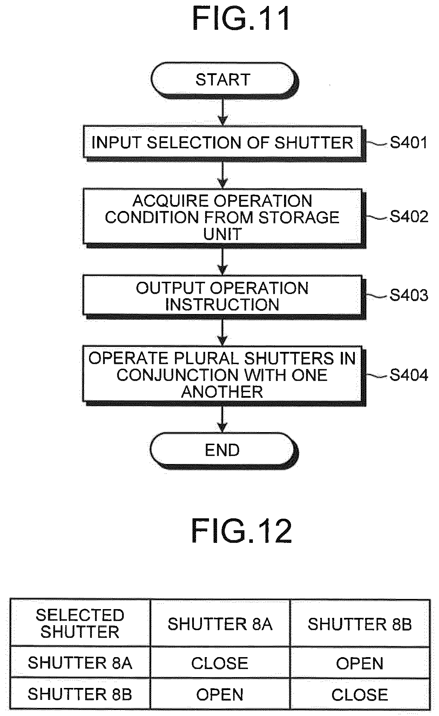

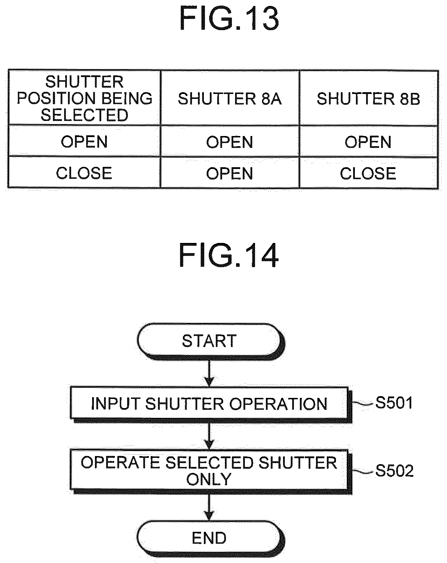

Subsequently, a sequence of operations of the shutter 8A and shutter 8B according to the third comparative example
will be described with reference to the drawings. FIG. 11 is a flow chart illustrating a sequence of operations for making a selection among a plurality of shutters according to the third comparative example. FIG. 12 is a diagram illustrating an example of a table of operation conditions stored in the storage unit 25 according to the third comparative example. FIG. 13 is a diagram illustrating an example of an operational state of each shutter upon a shutter selection input according to the third comparative example.

As for operations of the microscope apparatus 100 upon its initiation, similarly to the above described flow chart illustrated in FIG. 2, shutter and cube turret connection confirmation and shutter and cube turret initialization are performed. If, for example, the shutter 8A is set to be opened and the shutter 8B is set to be closed as an initial position in the third comparative example, the main controller 30 transmits control signals for the initial position to the shutter operation controller 19A and shutter operation controller 19B. Thereby, the shutter 8A is opened and the shutter 8B is closed.

A user inputs a selection of the shutter 8A or shutter 8B via the input unit 24 (step S401). The input unit 24 has a selector, such as buttons or switches, to select the shutter 8A or shutter 8B, and the user inputs the shutter 8A or shutter 8B selection via the selector.

The main controller 30 acquires, from the storage unit 25, operation conditions corresponding to an instruction to select the shutter 8A or shutter 8B by the user via the input unit 24 (step S402). For example, a table of operation conditions is stored in the storage unit
25, and if the user selects the shutter 8A, the shutter 8A is to be closed and the shutter 8B is to be opened (see FIG. 12). Further, while the shutter 8B is being selected, if the user selects "open", the shutter 8A and shutter 8B are to be opened, and if the user selects "close", the shutter 8A is to be opened and the shutter 8B is to be closed (see FIG. 13).

After acquiring the operation conditions, the main controller 30 outputs, based on the acquired operation conditions, control signals for operations of the shutter 8A and shutter 8B to the shutter operation controller 19A and shutter operation controller 19B, respectively (step S403). For example, if the shutter 8A is selected and input, the main controller 30 outputs control signals to close the shutter 8A and open the shutter 8B respectively to the shutter operation controller 19A and shutter operation controller 19B.

The shutter operation controller 19A and shutter operation controller 19B control, based on the received control signals, motors to operate the shutter 8A and shutter 8B (step S404). Thereby, by the user's shutter selection and input, the shutter 8A and shutter 8B are operated in conjunction with each other.

FIG. 14 is a flow chart illustrating a sequence of operations of a plurality of shutters according to the third comparative example. If an operation of the shutter 8 is input via the input unit 24 by the user (step S501), the main controller 30 outputs a control signal to operate only the shutter 8A selected in the initialization process to the shutter operation controller 19A and causes only the selected shutter 8A to be operated (step S502). The input unit 24 has a selector, such as buttons or switches, to open or close the shutter 8A or
shutter 8B and the main controller 30 outputs, based on the input operation instruction, a control signal to cause only the selected shutter 8A to perform the open or close operation.

The third comparative example has the effect of, even if the two shutters 8A and 8B are arranged on the same optical path, on which the illumination light emitted from the one light source 5 is incident, by a single process of selecting and inputting the shutter 8A or shutter 8B: allowing release or shut-off of the optical path; allowing complicated manipulation to be omitted, the complicated manipulation including determining a position where the shutter 8A and shutter 8B do not hinder observation between each other and individually inputting operations of the shutters; and allowing contribution to improvement of operability for a user.

In the third comparative example, the case in which the two shutters 8A and 8B are arranged on the same optical path has been described as an example, but as long as there are two or more, even if three or more shutters are connected, similarly, by a single operation, the three or more shutters are able to be manipulated in conjunction with one another, and time and effort required for the manipulation are able to be reduced.

If, after the shutter 8A is selected, the shutter 8B operates in conjunction with another unit in another sequence, for example, if the shutter 8B operates in conjunction with the filter wheel 15, the shutter 8B may be closed, such that the shutter 8B is not at the shutter 8B's position (not open) after the selection of the shutter 8A. In that case, the main controller 30 detects end of the operation of the filter wheel 15, and transmits a control signal to open the shutter 8B to the shutter operation
controller 19B. Thereby, even if the other sequence causes it to be in a state different from the position after the shutter selection, automatic return to the position after the shutter selection becomes possible, and there is an effect that contribution to improvement of operability for a user is possible.

(Fourth comparative example)

A microscope apparatus according to a fourth comparative example has the same configuration as that of the microscope apparatus 100 according to first comparative example of FIG. 1 in that two shutters are connected on an optical path on which illumination light emitted from one light source is incident, but is different from the first comparative example in that it operates such that if a user selects a cube to be used, after closing the two shutters, a cube selection operation is performed and thereafter, the two shutters are opened. With the cube selection instruction being a trigger, by performing the cube selection operation and opening the two shutters in conjunction with each other after closing the two shutters in conjunction with each other, operability for a user is able to be improved and discoloration of a sample is able to be prevented.

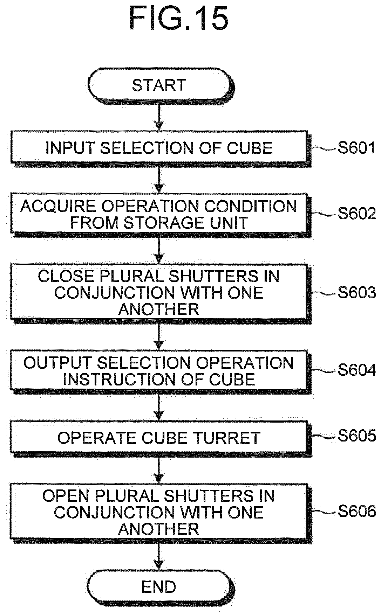

A sequence of operations of the shutter 8A and shutter 8B, as well as the cube turret 10 according to the fourth comparative example will be described with reference to the drawings. FIG. 15 is a flow chart illustrating the sequence of the operations of the shutter 8A and shutter 8B as well as the cube turret 10 according to the fourth comparative example.

As for operations of the microscope apparatus 100 upon its initiation, similarly to the above described flow chart illustrated in FIG. 2, shutter and cube turret connection confirmation and shutter and cube turret
initialization are performed. If, as an initial position according to the fourth comparative example, for example, the cube A-1 is set for the cube turret 10, the main controller 30 transmits a control signal for the initial position to the cube turret operation controller 23. Further, if as the initial position, for example, "open" is set for the shutter 8A and shutter 8B, the main controller 30 transmits control signals for the initial position to the shutter operation controller 19A and shutter operation controller 19B. Thereby, the cube turret 10 inserts the cube A-1 onto the observation optical path and the shutter 8A and shutter 8B are opened.

A user inputs a selection of a cube via the input unit 24 (step S601). The input unit 24 has a selector, such as buttons or switches, to select a cube, and the user inputs a cube selection via the selector.

After the input of the cube selection, the main controller 30 acquires operation conditions from the storage unit 25 (step S602). The operation conditions of the fourth comparative example are that after the shutter 8A and shutter 8B are closed in conjunction with each other and the cube selected in the initialization process is arranged on the observation optical path, the shutter 8A and shutter 8B are opened.

The main controller 30 transmits control signals for closing the shutter 8A and shutter 8B to the shutter operation controller 19A and shutter operation controller 19B, based on the acquired operation conditions, and causes the shutter 8A and shutter 8B to close in conjunction with each other (step S603). By causing the shutter 8A and shutter 8B to close when a cube switch over operation is performed, discoloration of the sample 2 is able to be prevented.

Thereafter, the main controller 30 transmits, to the cube turret operation controller 23, an operation instruction for the cube selected in the initialization process, that is, a control signal to arrange the selected cube on the observation optical path (step S604).

The cube turret operation controller 23 that has received the control signal operates the cube turret 10 and places the selected cube on the observation optical path (step S605).

The main controller 30 transmits control signals to open the shutter 8A and shutter 8B to the shutter operation controller 19A and shutter operation controller 19B, and based on the received control signals, the shutter operation controller 19A and shutter operation controller 19B control motors to open the shutter 8A and shutter 8B (step S606).

According to the fourth comparative example, when the two shutters 8A and 8B are arranged on the same optical path, on which irradiation light emitted from the one light source 5 is incident, by a single operation, with a cube selection input being a trigger, the two shutters 8A and 8B are able to be operated in conjunction with each other, and while being able to omit complicated manipulation of inputting operations of the shutters individually, discoloration of the sample 2 is able to be prevented.

In the fourth comparative example, the case in which the two shutters 8A and 8B are arranged on the same optical path has been described as an example, but as long as there are two or more, even if three or more shutters are connected, by a single operation, with a cube selection input being a trigger, the three or more shutters are able to be manipulated in conjunction with one another and time and effort required for the manipulation are able to be
reduced.

Further, in the fourth comparative example, although the shutter 8A and shutter 8B are closed in conjunction with each other and after the cube selection operation, further the shutter 8A and shutter 8B are opened in conjunction with each other, the operation conditions may be that after operating a close operation of the shutter 8A and an open operation of the shutter 8B in conjunction with each other, and after a cube selection operation, only the shutter 8A is opened further. Or, the operation conditions may be that, after operating an open operation of the shutter 8A and a close operation of the shutter 8B in conjunction with each other, and after a cube selection operation, only the shutter 8B is opened further.

### (Fifth comparative example)

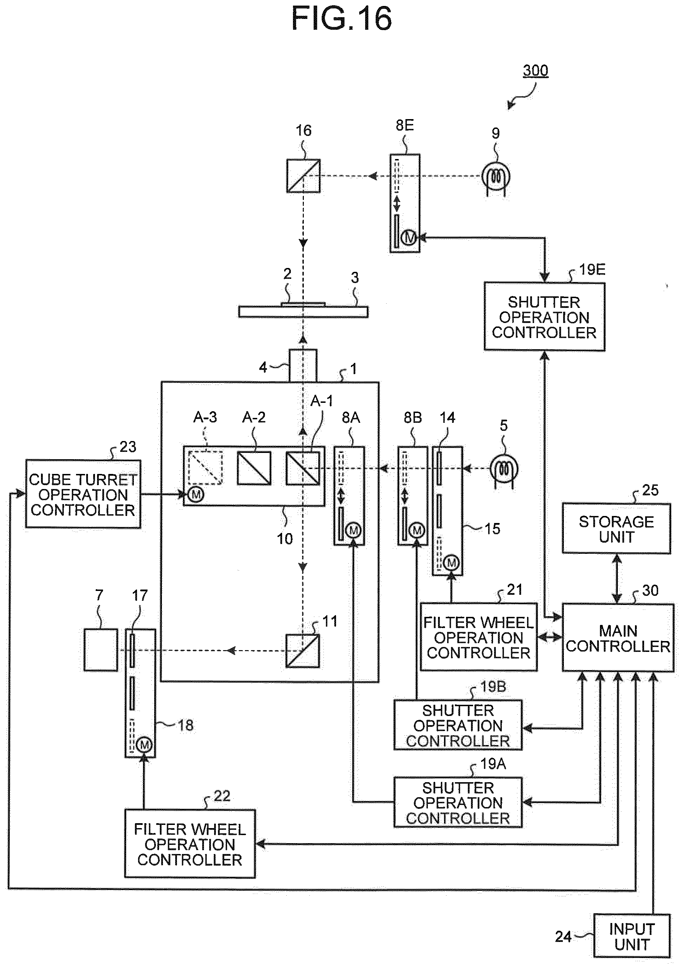

A microscope apparatus according to a fifth comparative example includes, in addition to a plurality of shutters arranged on an optical path on which irradiation light from one epi-illumination light source is incident, a shutter that switches between irradiation with illumination light from a transmitted light source and blocking of the illumination light, and the microscope apparatus operates the plurality of shutters in conjunction with one another with an input of a microscopy being a trigger. FIG. 16 is a diagram illustrating a schematic configuration of a microscope apparatus according to the fifth comparative example.

As illustrated in FIG. 16, a microscope apparatus 300 according to the fifth comparative example includes a transmitted-light illumination optical system, which has: a light source 9; a shutter 8E that switches between irradiation with illumination light from the light source 9 and blocking of the illumination light; a shutter operation
controller 19E that controls operations of the shutter 8E; and a mirror 16 that reflects the illumination light from the light source 9 to the sample 2.

The input unit 24 of the microscope apparatus 300 has a selector, such as buttons or switches, to select a microscopy, for example, a transmitted-light microscopy, an epi-illumination microscopy, or a simultaneous microscopy for performing the transmitted-light microscopy and epi-illumination microscopy simultaneously, and a user inputs a microscopy selection via the selector.

The storage unit 25 of the microscope apparatus 300 stores a table of operation conditions of the shutter 8A, shutter 8B, and shutter 8E, corresponding to microscopy selections by the input unit 24.

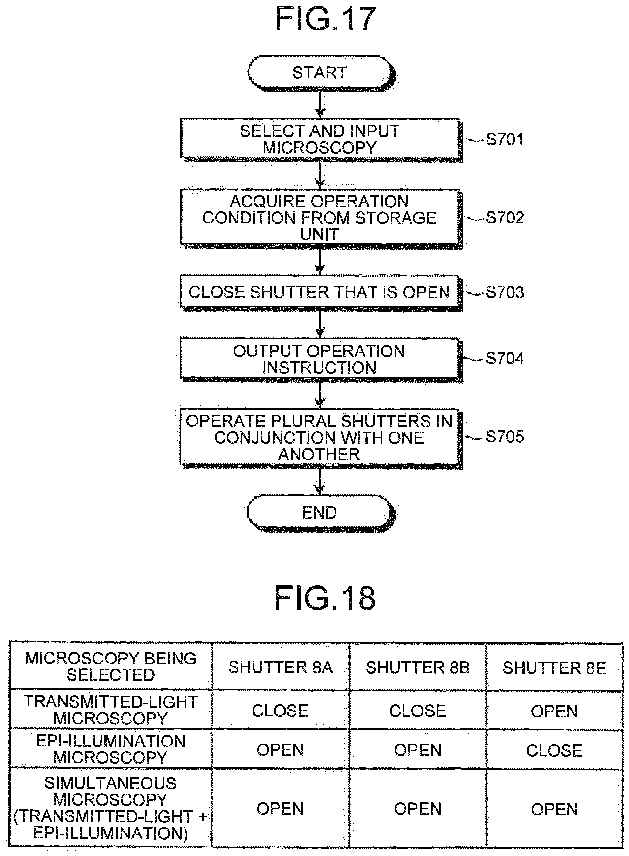

A sequence of operations of the shutter 8A, shutter 8B, and shutter 8E according to the fifth comparative example will be described with reference to the drawings. FIG. 17 is a flow chart illustrating the sequence of the operations of the shutter 8A, shutter 8B, and shutter 8E according to the fifth comparative example. FIG. 18 is a diagram illustrating an example of a table of operation conditions stored in a storage unit according to the fifth comparative example.

As for operations of the microscope apparatus 300 upon its initiation, similarly to the above described flow chart illustrated in FIG. 2, shutter and cube turret connection confirmation and shutter and cube turret initialization are performed. If, for example, the transmitted-light microscopy is being selected as the initial position in the fifth comparative example, the shutter 8A and shutter 8B are to be closed, and the shutter 8E is to be opened, and thus the main.
controller 30 transmits control signals for the initial position to the shutter operation controller 19A, shutter operation controller 19B, and shutter operation controller 19E. Thereby, the shutter 8A and shutter 8B are closed, and the shutter 8E is opened.

A user selects and inputs a microscopy via the input unit 24 (step S701).

After the input of the microscopy selection, the main controller 30 acquires operation conditions from the storage unit 25 (step S702). In the fifth comparative example, a table of operation conditions as illustrated in FIG. 18 is stored in the storage unit 25, and if, for example, the user selects the epi-illumination microscopy, the shutter 8A and shutter 8B are to be opened and the shutter 8E is to be closed.

If the initialization indicates the transmitted-light microscopy, in order to perform a close operation for the shutter 8E that is open, the main controller 30 transmits a control signal for closing the shutter 8E to the shutter operation controller 19E to close the shutter 8E (step S703). Thereby, discoloration of the sample 2 is able to be prevented.

Thereafter, the main controller 30 transmits operation conditions for the microscopy selected in step S701, that is, control signals to open the shutter 8A and shutter 8B, to the shutter operation controller 19A and shutter operation controller 19B (step S704).

The shutter operation controller 19A and shutter operation controller 19B, which have received the control signals, control motors to open the shutter 8A and shutter 8B in conjunction with each other (step S705).

According to the fifth comparative example, because the plurality of shutters arranged on the optical path, on
which the illumination light from the epi-illumination light source is incident, and the shutter that switches between irradiation with the illumination light from the transmitted light source and blocking of the illumination light are able to be operated in conjunction with one another, with the input of the microscopy being the trigger, while omitting complicated manipulation of inputting operations of the shutters individually, the transmitted-light microscopy and epi-illumination microscopy are able to be switched over to each other.

In the fifth comparative example, from the viewpoint of prevention of discoloration of the sample 2, all of the shutters are closed once, but all of the three shutters may be operated in conjunction with one another.

### (Sixth comparative example)

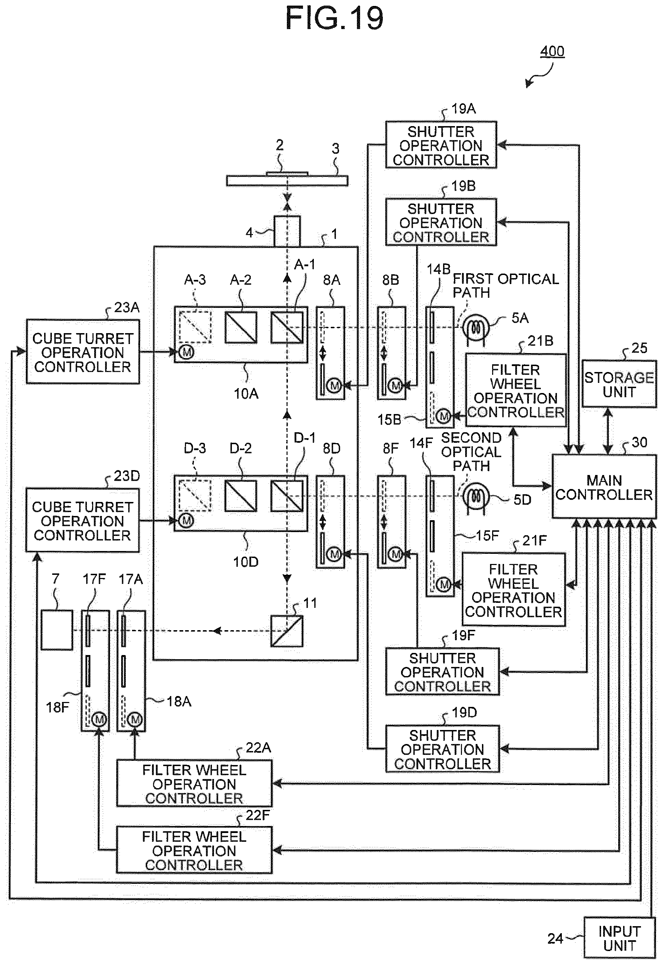

In a microscope apparatus according to a sixth comparative example, two cube turrets are arranged on the same observation optical path; and two shutters, which switch between irradiation with illumination light from an individual light source with respect to each cube turret and blocking of the illumination light, are arranged, and the plural shutters are caused to be operated in conjunction with each other by an input of an optical path (light source) selection. FIG. 19 is a diagram illustrating a schematic configuration of the microscope apparatus according to the sixth comparative example.

As illustrated in FIG. 19, a microscope apparatus 400 according to the sixth comparative example has two cube turrets 10A and 10D arranged on an optical path, which observation light reflected from the sample 2 passes. The cube turret 10A and cube turret 10D are connected to the main controller 30 via a cube turret operation controller 23A
and a cube turret operation controller 23D.

On the cube turret 10A, illumination light from the light source 5A is incident, and on a first optical path of the illumination light from the light source 5A, the shutter 8A and shutter 8B, which switch between irradiation with the illumination light and blocking of the illumination light, are arranged. Further, illumination light from the light source 5D is incident on the cube turret 10D, and the shutter 8D and a shutter 8F, which switch between irradiation with the illumination light and blocking of the illumination light, are arranged on a second optical path of the illumination light from the light source 5D. The shutter 8A and shutter 8B are connected to the main controller 30 via the shutter operation controller 19A and shutter operation controller 19B, and the shutter 8D and shutter 8F are connected to the main controller 30 via the shutter operation controller 19D and shutter operation controller 19F. Further, the cube turret 10A and cube turret 10D are connected to the main controller 30 via a cube turret operation controller 23A and a cube turret operation controller 23D.

On the first optical path of the light emitted from the light source 5A, a filter wheel 15B having therein a plurality of excitation filters 14B is arranged, and the shutter 8B is synchronized with the filter wheel 15B. Further, on the second optical path of the light emitted from the light source 5D, a filter wheel 15F having therein a plurality of excitation filters 14F is arranged, and the shutter 8F is synchronized with the filter wheel 15F. The filter wheel 15B and filter wheel 15F are connected to the main controller 30 via the filter wheel operation controller 21B and the filter wheel operation controller 21F.

Further, on the observation optical path, a
filter wheel 18A having therein a plurality of absorption filters 17A and a filter wheel 18F having therein a plurality of absorption filters 17F are arranged. The filter wheel 18A operates in synchronization with the filter wheel 15B, and the filter wheel 18F operates in synchronization with the filter wheel 15F. The filter wheel 18A and filter wheel 18F are connected to the main controller 30 via the filter wheel operation controller 22A and the filter wheel operation controller 22F.

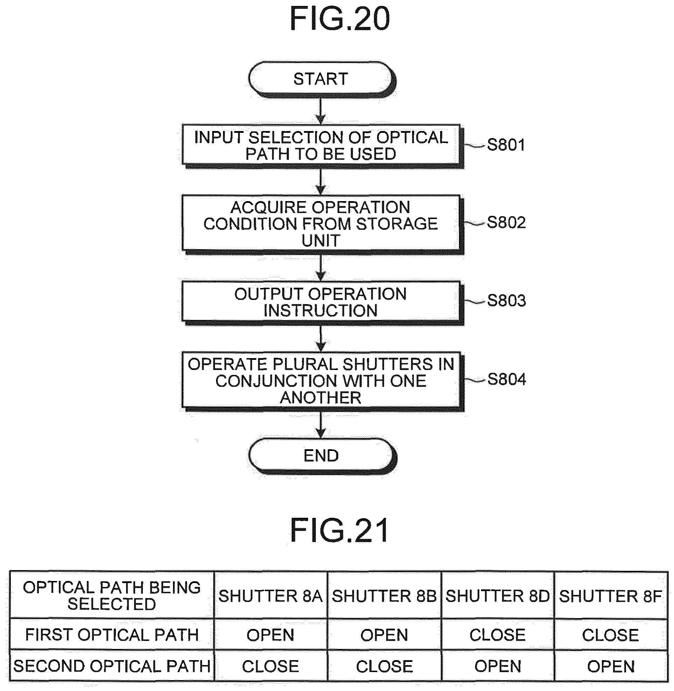

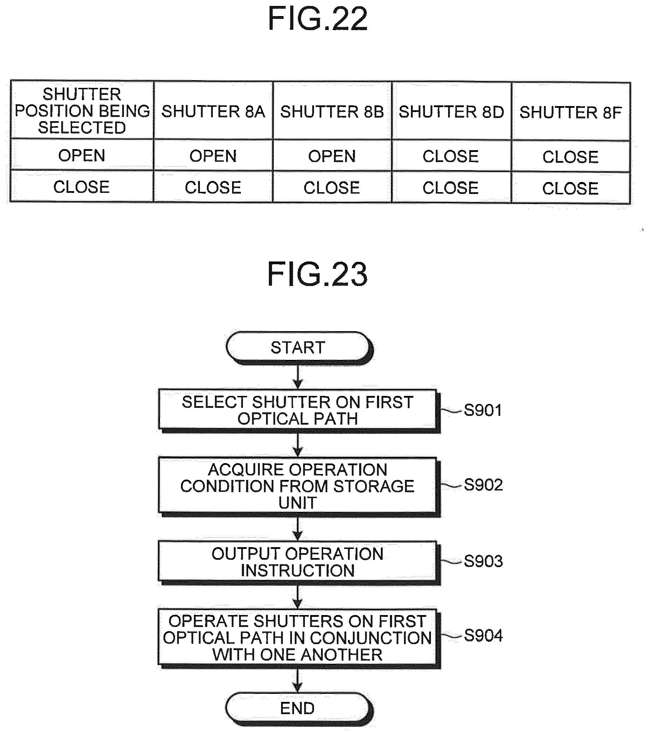

A sequence of operations of the shutter 8A, shutter 8B, shutter 8D, and shutter 8F according to the sixth comparative example will be described with reference to the drawings. FIG. 20 is a flow chart illustrating the sequence of the operations of the shutter 8A, shutter 8B, shutter 8D, and shutter 8F according to the sixth comparative example. FIG. 21 and FIG. 22 are diagrams each illustrating an example of a table of operation conditions stored in a storage unit according to the sixth comparative example.

As for operations of the microscope apparatus 400 upon its initiation , similarly to the above described flow chart illustrated in FIG. 2, shutter and cube turret connection confirmation and shutter and cube turret initialization are performed. If an initial position in the sixth comparative example is, for example, the shutter 8A and shutter 8B being closed and the shutter 8D and shutter 8F being open, the main controller 30 transmits control signals for this initial position to the shutter operation controller 19A, shutter operation controller 19B, shutter operation controller 19D, and shutter operation controller 19F. Thereby, the shutter 8A and shutter 8B are closed, and the shutter 8D and shutter 8F are opened.

A user inputs a selection of an optical path (light source) to be used, via the input unit 24 (step S801).

After the input of the selection of the optical path, the main controller 30 acquires operation conditions from the storage unit 25 (step S802). In the sixth comparative example, a table of operations conditions as illustrated in FIG. 21 is stored in the storage unit 25, and for example, if the user selects the first optical path, the shutter 8A and shutter 8B on the first optical path are to be open and the shutter 8D and shutter 8F on the second optical path are to be closed.

The main controller 30 transmits, to the shutter operation controller 19A, shutter operation controller 19B, shutter operation controller 19D, and shutter operation controller 19F, control signals to open the shutter 8A and shutter 8B on the first optical path and to close the shutter 8D and shutter 8F on the second optical path (step S803).

The shutter operation controller 19A, shutter operation controller 19B, shutter operation controller 19D, and shutter operation controller 19F, which have received the control signals, control motors, such that the shutter 8A and shutter 8B are opened and the shutter 8D and shutter 8F are closed, in conjunction with each other (step S804).

Thereafter, if the user inputs a shutter operation via the input unit 24, similarly to the flow chart illustrated in FIG. 3, the main controller 30 acquires operation conditions from the storage unit 25 and operates a plurality of shutters in conjunction with one another. The operation conditions are stored as a table as illustrated in FIG. 22, and if the user has selected "open", only the shutter 8A and shutter 8B on the first optical
path being selected are to be opened and the shutter 8D and shutter 8F on the second optical path are to be kept closed. Further, if the user has selected "close", only the shutter 8A and shutter 8B on the first optical path being selected are to be closed, and the shutter 8D and shutter 8F on the second optical path do not operate, being kept closed.

In the sixth comparative example, even if there are two light sources, and two shutters are connected on an optical path from each light source, by a user's selection of an optical path, a plurality of shutters are able to be operated in conjunction with each other, and shut-off of an optical path not being used in the observation becomes possible. Further, by an input of one shutter operation, a plurality of shutters are able to be operated in conjunction with one another, and release and shut-off of only an optical path being used in the observation become possible.

### (Seventh comparative example)

A microscope apparatus according to a seventh comparative example has the same configuration as that of the microscope apparatus 400 according to the sixth comparative example illustrated in FIG. 19 in that two cube turrets are arranged on the same optical path and two shutters, which switch between irradiation with illumination light from an individual light source with respect to each cube turret and blocking of the illumination light, are arranged, but is different from the sixth comparative example in that after a user selects a shutter to be used for each optical path, an optical path to be used is selected and a shutter operation is input.

A sequence of operations of the shutter 8A, shutter 8B, shutter 8D, and shutter 8F according to the seventh comparative example will be
described with reference to the drawings. First, operations for selecting a shutter in each optical path will be described. In the shutter selection, a selection of a shutter is performed for each of the first optical path and second optical path. FIG. 23 is a flow chart illustrating a sequence of the operations for selecting a shutter according to the seventh comparative example.

As for operations of the microscope apparatus 400 upon its initiation, similarly to the above described flow chart illustrated in FIG. 2, shutter and cube turret connection confirmation and shutter and cube turret initialization are performed. If an initial position in the seventh comparative example is, for example, the shutter 8A, shutter 8B, and shutter 8F being open and the shutter 8D being closed, the main controller 30 transmits control signals of this initial position to the shutter operation controller 19A, shutter operation controller 19B, shutter operation controller 19D, and shutter operation controller 19F. Thereby, the shutter 8A, shutter 8B, and shutter 8F are opened and the shutter 8D is closed.

A user inputs a selection of a shutter to be used on the first optical path, via the input unit 24 (step S901).

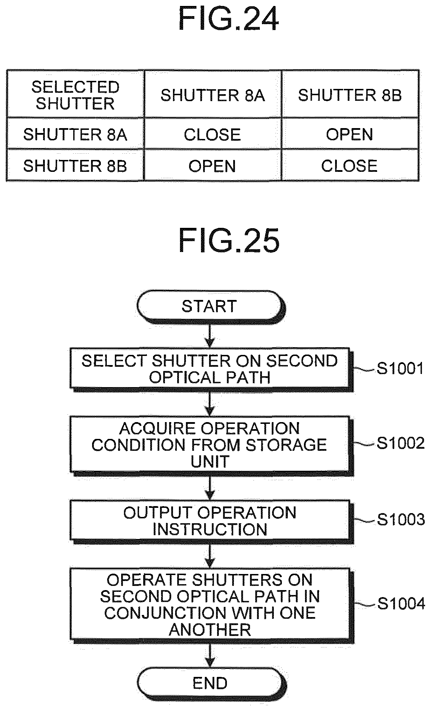

The main controller 30 acquires operation conditions for the shutter selected in the first optical path from the storage unit 25 (step S902). In the seventh comparative example, a table of operation conditions of the first optical path as illustrated in FIG. 24 is stored in the storage unit 25 and for example, if the user selects the shutter 8A, the shutter 8A is to be closed and the shutter 8B is to be opened. By once closing the shutter to be used,
discoloration of the sample 2 is able to be prevented.

The main controller 30 transmits, to the shutter operation controller 19A and shutter operation controller 19B, control signals to operate the shutter 8A and shutter 8B under the acquired operation conditions (step S903) and the shutter operation controller 19A and shutter operation controller 19B, which have received the control signals, control motors to operate the shutter 8A and shutter 8B in conjunction with each other (step S904).

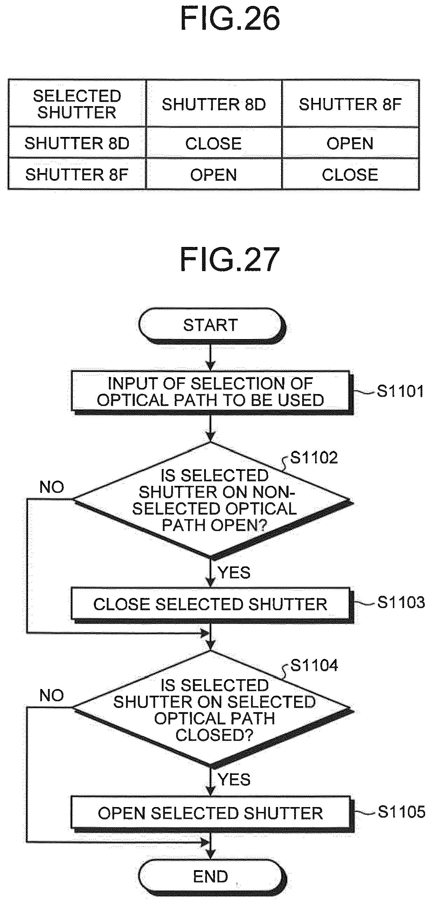

FIG. 25 is a flow chart illustrating a sequence of the operations for selecting a shutter according to the seventh comparative example. Subsequently to the shutter selection on the first optical path, the user inputs, via the input unit 24, a selection of a shutter to be used on the second optical path (step S1001), and the main controller 30 acquires operation conditions for the shutter selected in the second optical path from the storage unit 25 (step S1002). In the seventh comparative example, a table of operation conditions of the second optical path as illustrated in FIG. 26 is stored in the storage unit 25, and for example, if the user selects the shutter 8D, the shutter 8D is to be closed and the shutter 8F is to be opened.

The main controller 30 transmits control signals to operate the shutter 8D and shutter 8F under the acquired operation conditions to the shutter operation controller 19D and shutter operation controller 19F (step S1003), and the shutter operation controller 19D and shutter operation controller 19F, which have received the control signals, control motors to operate the shutter 8D and shutter 8F in conjunction with each other (step S1004).

FIG. 27 is a flow chart illustrating a sequence of operations of shutters in the seventh comparative example.

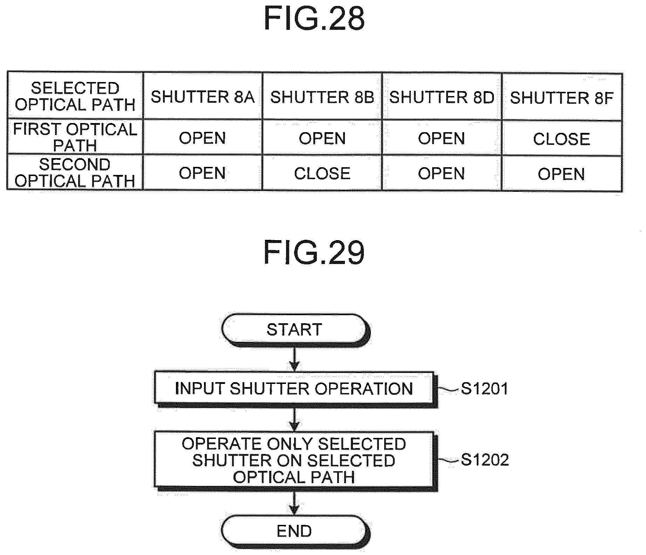

FIG. 28 is a diagram illustrating an example of an operational state of each shutter upon optical path selection input according to the seventh comparative example. When the shutter selection for the first optical path and second optical path is finished, the user inputs, via the input unit 24, a selection of an optical path (light source) to be used (step S1101), and the main controller 30 detects the input of the selection of the optical path.

Thereafter, the main controller 30 determines whether or not the selected shutter on the non-selected optical path is open (step S1102). If the main controller 30 determines that the selected shutter on the non-selected optical path is open (step S1102; Yes), the main controller 30 transmits a control signal to the shutter operation controller to close the selected shutter (step S1103) and proceeds to step S1104. On the contrary, if the main controller 30 determines that the selected shutter on the non-selected optical path is not open, that is, is closed (step S1102; No), the main controller 30 proceeds to step S1104.

The main controller 30 determines whether or not the selected shutter on the selected optical path is closed, after performing shutter control of the non-selected optical path (step S1104). If the main controller 30 determines that the selected shutter on the selected optical path is closed (step S1104; Yes), the main controller 30 causes the selected shutter to open by transmitting a control signal to the shutter operation controller (step S1105) and ends the shutter operation process. On the contrary, if the main controller 30 determines that the selected shutter on the non-selected optical path is not closed, that is, is open (step S1104;
No), the main controller 30 ends the shutter operation process.

By the above described shutter operation process, if, for example, the shutter 8B is selected as the shutter to be used in the first optical path and the shutter 8F is selected as the shutter to be used in the second optical path, when the first optical path is selected by the user, the shutter 8A, shutter 8B, and shutter 8D are opened and the selected shutter 8F is kept closed. Further, if the second optical path is selected by the user, the shutter 8A, shutter 8D, and shutter 8F are opened and the selected shutter 8B is kept closed.

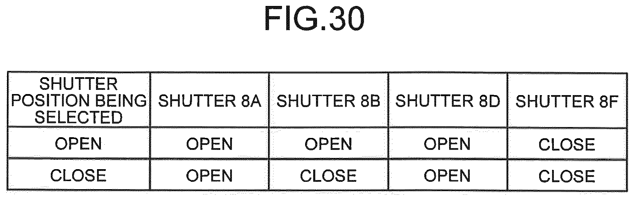

FIG. 29 is a flow chart illustrating a sequence of operations of a selected shutter according to the seventh comparative example. FIG. 30 is a diagram illustrating an example of a table of operation conditions stored in a storage unit according to the seventh comparative example. When the selection of the optical path is finished, the user inputs, via the input unit 24, a shutter operation (step S1201). The main controller 30 transmits a control signal to a shutter operation controller and performs control such that only the selected shutter on the selected optical path operates (step S1202). For example, if the first optical path is selected as the optical path, as illustrated in FIG. 30, when an operation to close the shutter is input, the main controller 30 causes the shutter 8B to close by the control of the shutter operation controller 19B.

According to the seventh comparative example, even if there are two light sources and two shutters are connected on an optical path from each light source, by a user's selection of an optical path, a plurality of shutters are able to be operated in conjunction with one another and
shut-off of an optical path not being used in the observation becomes possible. Further, by an input of one shutter operation, a plurality of shutters are able to be operated in conjunction with one another, and release and shut-off of only an optical path being used in the observation become possible.

In the seventh comparative example, although the case in which two shutters are arranged on each of the two optical paths has been described as an example, the number of shutters connected on each optical path just needs to be two or more, and even if three or more shutters are connected, similarly, just by one operation, the three or more shutters are able to be manipulated in conjunction with one another, and time and effort required for the manipulation are able to be reduced.

### (Embodiment of the present invention)

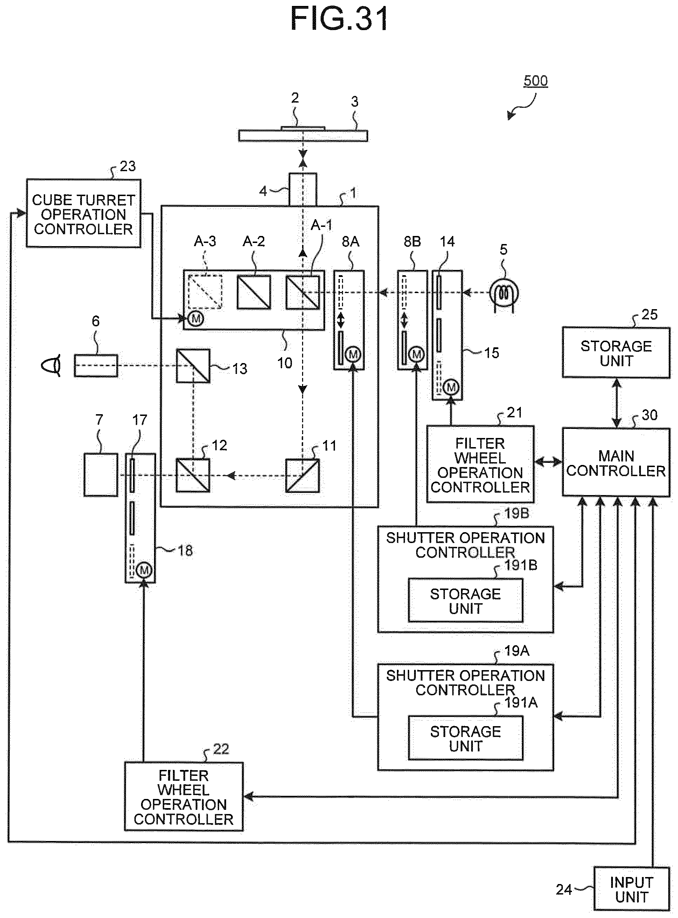

A microscope apparatus according to an embodiment of the present invention has the same configuration as that of the third comparative example in that it is operated such that a selected shutter is opened or closed and all of non-selected shutters are opened, but is different from the third comparative example in that the shutter operation controller 19A and shutter operation controller 19B have storage units. FIG. 31 is a diagram illustrating a schematic configuration of the microscope apparatus according to the embodiment of the present invention.

In a microscope apparatus 500 according to the present embodiment, a shutter operation controller 19A has a storage unit 191A that stores speed parameters of the shutter 8A. Further, the shutter operation controller 19B has a storage unit 191B that stores speed parameters of the shutter 8B. The speed parameters are parameters related to operations of shutters and include information such as
speeds related to opening and closing of shutters.

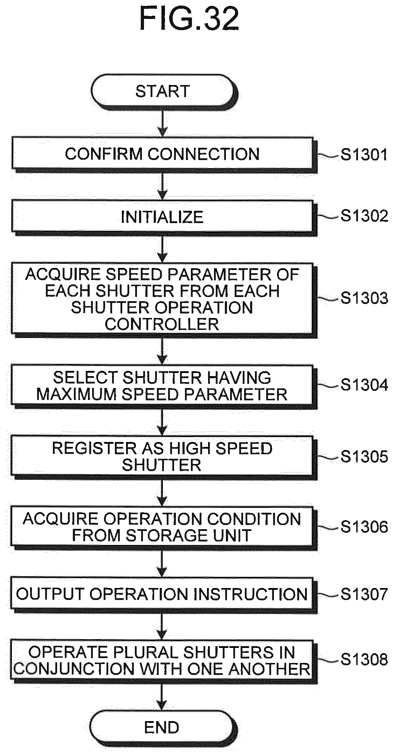

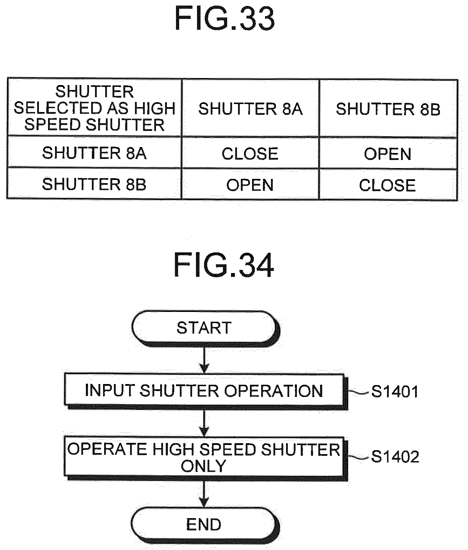

Subsequently, a sequence of operations of the shutter 8A and shutter 8B according to the embodiment of the present invention will be described with reference to the drawings. FIG. 32 is a flow chart illustrating a sequence of operations of a plurality of shutters according to the embodiment of the present invention. FIG. 33 is a diagram illustrating an example of a table of operation conditions stored in a storage unit according to the embodiment of the present invention.

As illustrated in FIG. 32, when power of the microscope apparatus 500 is turned ON, first, the main controller 30 confirms connection of the shutter 8A and shutter 8B with the shutter operation controller 19A and shutter operation controller 19B (step S1301).

Thereafter, initialization of the shutter 8A and shutter 8B is performed (S1302). By the initialization, the shutter 8A and shutter 8B are moved to their initial position. If, for example, the shutter 8A and shutter 8B are set to be open as their initial position, the main controller 30 transmits control signals for the initial position to the shutter operation controller 19A and shutter operation controller 19B. Thereby, the shutter 8A and shutter 8B are opened. The initial position may be determined beforehand, or may be a position upon the last time's very last usage. Further, the initial position may be defined as having all of the shutters closed.

Thereafter, the main controller 30 refers to the storage unit 191A and storage unit 191B and acquires the speed parameters of the shutter 8A and shutter 8B respectively (step S1303). The main controller 30 selects, from the shutter 8A and shutter 8B, a shutter for which the acquired speed parameter is larger (maximum) (step S1304),
and registers the selected shutter as a high speed shutter (a shutter to be controlled) in the storage unit 25 (step S1305).

The main controller 30 acquires operation conditions from the storage unit 25, after registering the high speed shutter (step S1306). For example, in the storage unit 25, a table of operation conditions as illustrated in FIG. 33 is stored, and according to the operation conditions, if the shutter 8A is registered as the high speed shutter, the shutter 8A is to be closed and the shutter 8B is to be opened.

After acquiring the operation conditions, the main controller 30 outputs, based on the acquired operation conditions, control signals for operations of the shutter 8A and shutter 8B respectively to the shutter operation controller 19A and shutter operation controller 19B (step S1307).

The shutter operation controller 19A and shutter operation controller 19B control, based on the received control signals, motors to operate the shutter 8A and shutter 8B respectively (step S1308). Thereby, the shutter 8A and shutter 8B are operated in conjunction with each other.

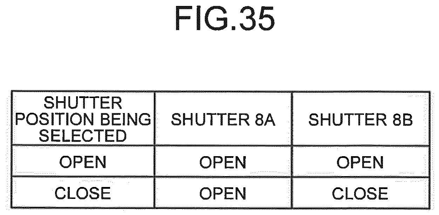

FIG. 34 is a flow chart illustrating a sequence of operations of a high speed shutter according to the embodiment of the present invention. FIG. 35 is a diagram illustrating an example of an operational state of each shutter upon an input of a shutter operation according to the embodiment of the present invention. If a shutter operation is input by a user via the input unit 24 (step S1401), the main controller 30 outputs a control signal to operate only the high speed shutter selected in step S1304 to the shutter operation controller and causes
only this high speed shutter to be operated (step S1402). The input unit 24 has a selector, such as buttons or switches, to open or close the high speed shutter and the main controller 30 outputs, if the shutter 8B has been registered as the high speed shutter, the input operation instruction as a control signal for causing only the selected shutter 8B to perform an open or close operation as illustrated in FIG. 35.

The embodiment has the effect of, even if the two shutters 8A and 8B are arranged on the optical path, on which the illumination light emitted from the one light source 5 is incident, by referring to the storage unit 191A and storage unit 191B and registering one of the shutter 8A and shutter 8B as the high-speed shutter: allowing release or shut-off of the optical path; allowing complicated manipulation of determining a position where observation is not hindered between the shutter 8A and shutter 8B and inputting operations of the shutters individually to be omitted; and allowing contribution to improvement of a user's operability.

Further, according to the embodiment, even if a user does not perform input of a shutter selection, a shutter is registered and operated such that only a high speed shutter is operated to open or close automatically, and thus selection and input by the user is able to be omitted and release or shut-off of an optical path becomes possible.

In the embodiment, although the case in which the two shutters 8A and 8B are arranged on the same optical path has been described as an example, as long as there are two or more, even if three or more shutters are connected, similarly, by a single operation, the three or more shutters are able to be manipulated in conjunction
with one another and time and effort required for the manipulation is able to be reduced.

Further, in the embodiment, for example, if the shutter 8B registered as the high speed shutter is operated in conjunction with the filter wheel 18 and is closed when the conjunction operation is finished, the main controller 30 causes the shutter 8A to close and causes the shutter 8B to open when the main controller 30 detects the finishing of the conjunction operation. Thereby, even if the shutter 8B operates in conjunction with another unit contrary to a user's intention, the shutter 8B is open when the conjunction operation is finished. Thus, it is possible to release or shut-off an optical path without the user confirming a condition of the shutter upon finishing of the operation, and to contribute to improvement of the user's operability. If the optical path is opened or closed by a user's input of an operation, the opening or closing of the optical path is performed by the shutter 8A which is not registered as the high speed shutter. Further, the same holds true for an operation in conjunction with another unit other than the filter wheel 18.

Further, as a modified example 8-1 of the embodiment, a microscope apparatus may be exemplified, which is different from the embodiment above in that two cube turrets are arranged on the same observation optical path, two shutters that switch between irradiation with illumination light from an individual light source with respect to each cube turret and blocking of the illumination light are arranged, and the plural shutters are operated in conjunction with one another by an input of an optical path selection.

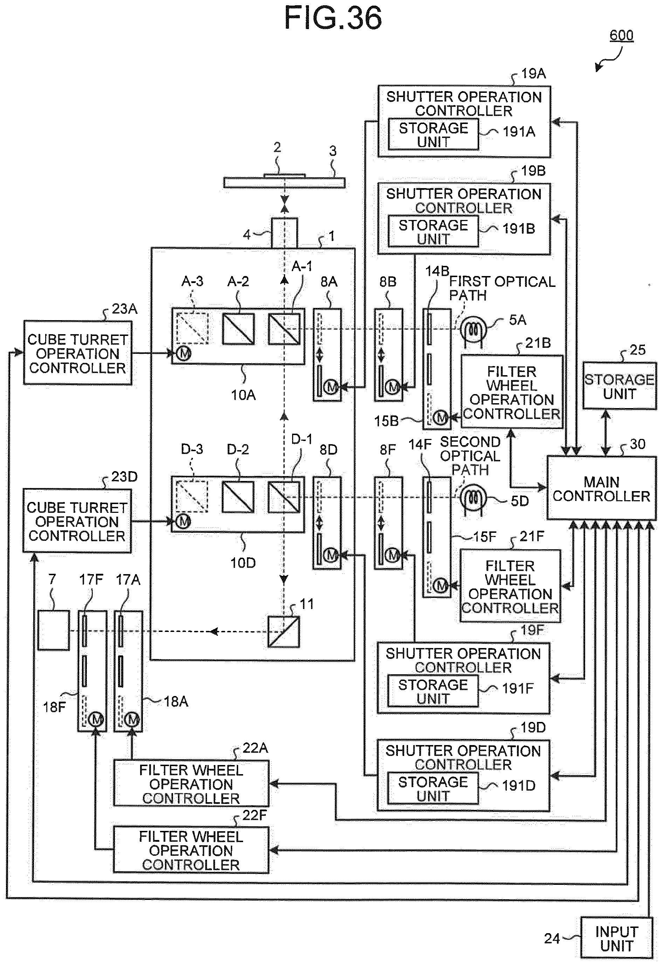

FIG. 36 is a diagram illustrating a schematic configuration of the microscope apparatus according to the
modified example 8-1 of the embodiment of the present invention. In a microscope apparatus 600 according to the modified example 8-1, in addition to the above described storage unit 191A and storage unit 191B, the shutter operation controller 19D has a storage unit 191D that stores speed parameters of the shutter 8D. Further, the shutter operation controller 19F has a storage unit 191F that stores speed parameters of the shutter 8F.

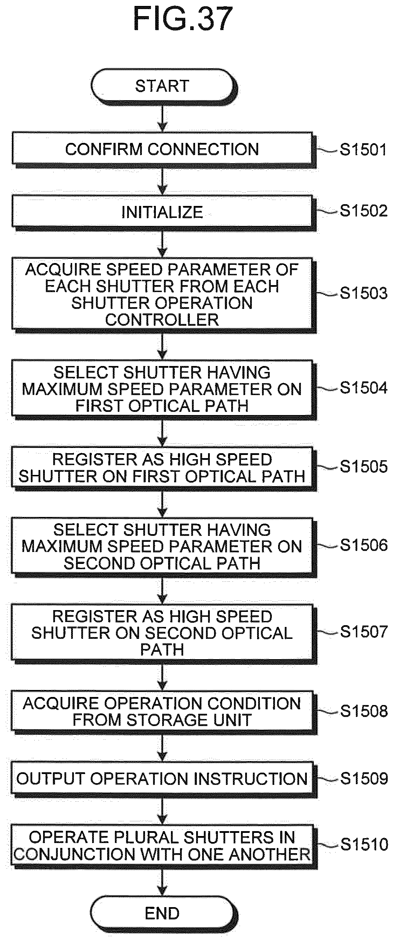

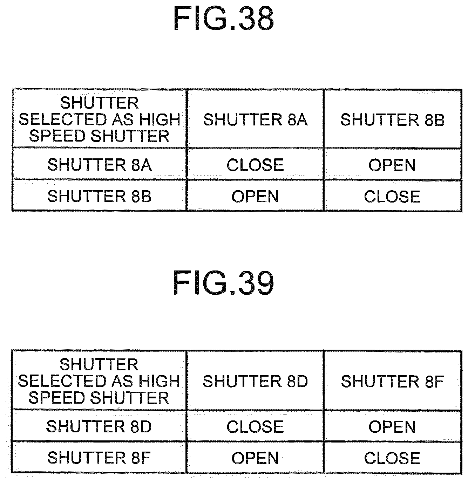

A sequence of operations of the shutter 8A, shutter 8B, shutter 8D, and shutter 8F according to the modified example 8-1 will be described with reference to the drawings. First, operations for selecting a high speed shutter in each optical path will be described. In the shutter selection, a selection of a high speed shutter is performed for each of the first optical path and second optical path. FIG. 37 is a flow chart illustrating a sequence of selecting a high speed shutter according to the modified example 8-1 of the embodiment of the present invention. FIG. 38 is a diagram illustrating an example of a table of operation conditions stored in a storage unit according to the modified example 8-1 of the embodiment of the present invention. FIG. 39 is a diagram illustrating an example of a table of operation conditions stored in the storage unit according to the modified example 8-1 of the embodiment of the present invention.

As illustrated in FIG. 37, when power of the microscope apparatus 600 is turned ON, first, the main controller 30 performs connection confirmation of the shutter 8A, shutter 8B, shutter 8D, and shutter 8F, with the shutter operation controller 19A, shutter operation controller 19B, shutter operation controller 19D, and shutter operation controller 19F (step S1501).

Thereafter, initialization of the shutter 8A, shutter 8B, shutter 8D, and shutter 8F is performed (S1502). By the initialization, the shutter 8A, shutter 8B, shutter 8D, and shutter 8F are moved to their initial position. If, as the initial position, for example, the shutter 8A, shutter 8B, shutter 8C, and shutter 8F are set to be open, the main controller 30 transmits control signals for the initial position to the shutter operation controller 19A, shutter operation controller 19B, shutter operation controller 19D, and shutter operation controller 19F. Thereby, the shutter 8A, shutter 8B, shutter 8D, and shutter 8F are opened. The initial position may be determined beforehand, or the initial position may be a position upon the last time's very last usage. Further, the initial position may be defined as having all of the shutters closed.

Thereafter, the main controller 30 refers to the storage unit 191A, storage unit 191B, storage unit 191D, and storage unit 191F, and acquires speed parameters of the shutter 8A, shutter 8B, shutter 8D, and shutter 8F, respectively (step S1503). The main controller 30 first selects a shutter having a larger one of the acquired speed parameters of the shutter 8A and shutter 8B (maximum speed parameter) on the first optical path (step S1504), and registers the selected shutter in the storage unit 25 as a high speed shutter on the first optical path (step S1505).

Next, the main controller 30 selects a shutter having a larger one of the acquired speed parameters of the shutter 8D and shutter 8F (maximum speed parameter) on the second optical path (step S1506), and registers the selected shutter in the storage unit 25 as a high speed shutter on the second optical path (step S1507).

The main controller 30 acquires operation conditions from the storage unit 25 after registering the high speed shutters (step S1508). For example, in the storage unit 25, tables of operation conditions as illustrated in FIGS. 38 and 39 are stored, and if the shutter 8A is registered as the high speed shutter, the shutter 8A is to be closed and the shutter 8B is to be opened. Further, if the shutter 8D is registered as the high speed shutter, the shutter 8D is to be closed and the shutter 8F is to be opened.

After acquiring the operation conditions, the main controller 30 outputs, based on the acquired operation conditions, control signals for operations of the shutter 8A, shutter 8B, shutter 8D, and shutter 8F to the shutter operation controller 19A, shutter operation controller 19B, shutter operation controller 19D, and shutter operation controller 19F respectively (step S1509).

The shutter operation controller 19A, shutter operation controller 19B, shutter operation controller 19D, and shutter operation controller 19F control, based on the received control signals, motors to operate the shutter 8A, shutter 8B, shutter 8D, and shutter 8F, respectively (step S1510). Thereby, the shutter 8A, shutter 8B, shutter 8D, and shutter 8F are operated in conjunction with one another.

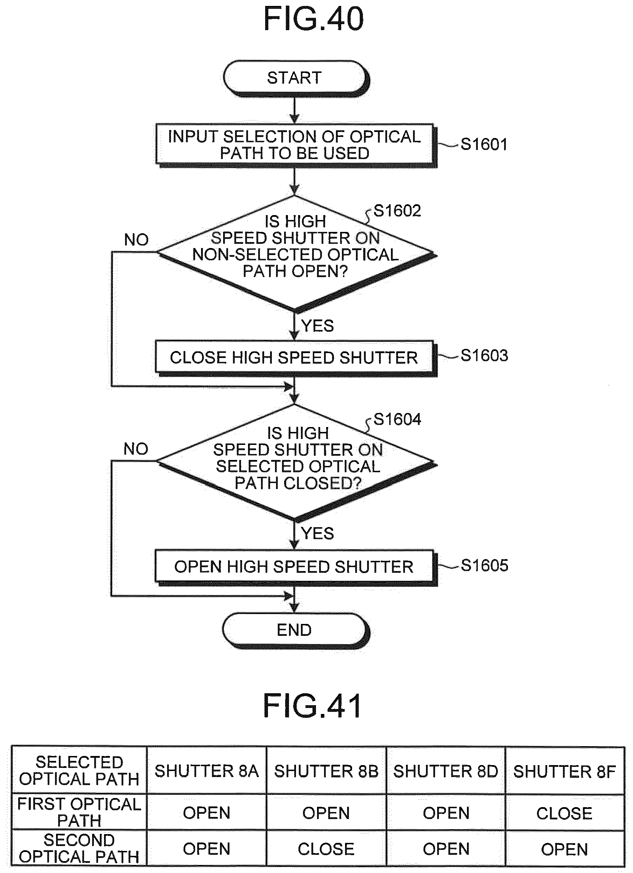

FIG. 40 is a flow chart illustrating a sequence of selecting an optical path according to the modified example 8-1 of the embodiment of the present invention. FIG. 41 is a diagram illustrating an example of an operational state of each shutter when an optical path selection is input in the modified example 8-1 of the embodiment of the present invention. When the shutter selection for the first optical path and second optical path is finished, a user inputs, via the input unit 24, a selection of an optical path to be used (step S1601),
and the main controller 30 detects the input of the optical path selection.

Thereafter, the main controller 30 determines whether or not the high speed shutter on the non-selected optical path is open (step S1602). If the main controller 30 determines that the high speed shutter on the non-selected optical path is open (step S1602; Yes), by transmitting a control signal to the shutter operation controller, the main controller 30 causes this high speed shutter to close (step S1603) and proceeds to step S1604. On the contrary, if the main controller 30 determines that the high speed shutter on the non-selected optical path is not open, that is, is closed (step S1602; No), the main controller 30 proceeds to step S1604.

After performing shutter control for the non-selected optical path, the main controller 30 determines whether or not the high speed shutter on the selected optical path is closed (step S1604). If the main controller 30 determines that the high speed shutter on the selected optical path is closed (step S1604; Yes), by transmitting a control signal to the shutter operation controller, the main controller 30 causes this high speed shutter to open (step S1605) and ends the optical path selection process. On the contrary, if the main controller 30 determines that the high speed shutter on the selected optical path is not closed, that is, is open (step S1604; No), the main controller 30 ends the optical path selection process.

By the above described optical path selection process, for example, if the user has selected the first optical path and the shutter 8B and shutter 8F have been registered as the high speed shutters, as illustrated in FIG. 41, the shutter 8A, shutter 8B, and shutter 8D are
opened and the selected shutter is kept closed. Further, if the used has selected the second optical path and the shutter 8B and shutter 8F have been registered as the high speed shutters, the shutter 8A, shutter 8D, and shutter 8F are opened and the selected shutter 8B is kept closed.

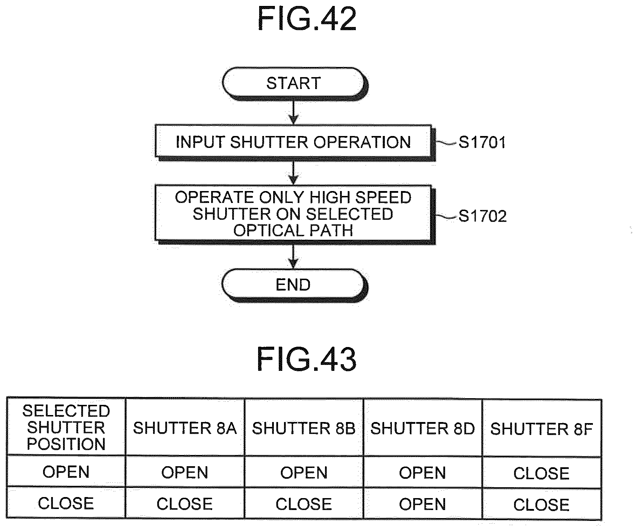

FIG. 42 is a flow chart illustrating a sequence of operations of the shutters in the modified example 8-1 of the embodiment of the present invention. FIG. 43 is a diagram illustrating an example of operational states of each shutter upon inputs of operations according to the modified example 8-1 of the embodiment of the present invention. When the selection of an optical path is finished, the user inputs a shutter operation via the input unit 24 (step S1701). The main controller 30 transmits a control signal to the shutter operation controller and performs control such that only the high speed shutter on the selected optical path is operated (step S1702). For example, if the first optical path has been selected as the optical path and the shutter 8B and shutter 8F have been registered as the high speed shutters, as illustrated in FIG. 43, if an operation to close the shutter is input, the main controller 30 closes the shutter 8B by the control of the shutter operation controller 19B.

According to the modified example 8-1, even if there are two light sources and two shutters are connected on an optical path from each light source, by a selection of an optical path by a user, a plurality of shutters are able to be operated in conjunction with one another and shut-off of an optical path not being used in the observation becomes possible. Further, by an input of one shutter operation, a plurality of shutters are able to be operated in conjunction with one another, and release and shut-off of only an optical path being used in the
observation become possible.

Further, according to the modified example 8-1, even if a user does not input a shutter selection, shutters are registered and operated so as to automatically perform an open or close operation of only a high speed shutter, an input of a selection by the user is able to be omitted and release or shut-off of an optical path become possible.

### Industrial Applicability

As described above, a microscope apparatus according to the present invention is useful for a microscope apparatus to which optical units of the same type are connected, and in particular is suitable for an inverted microscope apparatus having a plurality of illumination optical systems.

### Reference Signs List

1 Microscope main body unit
2 Sample
3 Stage
4 Objective lens
5, 5A, 5D Light source
6 Eyepiece
7 Imaging element
8A, 8B, 8C, 8D, 8E, 8F Shutter
10, 10A, 10D Cube turret
11, 13, 16 Mirror
12 Beam splitter
14, 14B, 14F Excitation filter
15, 15B, 15F, 18, 18A, 18F Filter wheel
17, 17B, 17F Absorption filter
19A, 19B, 19C, 19D, 19E, 19F Shutter operation controller
21, 21B, 21F, 22, 22A, 22F Filter wheel operation controller
23, 23A, 23D Cube turret operation controller
24 Input unit
25, 191A, 191B, 191D, 191F Storage unit
30 Main controller
100, 200, 300, 400, 500, 600 Microscope apparatus

## Claims

1. A microscope apparatus (500) comprising:
a stage (3) on which a sample (2) is configured to be placed;
a microscope main body unit (1) that holds the stage (3);
an objective lens (4) arranged below the sample (2);
one or a plurality of light sources (5, 5A, 5D) configured to emit light for exciting the sample (2);
one or a plurality of cube turrets (10, 10A, 10D) that holds a plurality of fluorescent cubes and is configured to arrange the plurality of fluorescent cubes selectively on an observation optical path;
an imaging element (7) configured to capture an image of the sample (2);
a plurality of shutters (8A, 8B) arranged on an illumination optical path and configured to switch between irradiation of the sample (2) with the light emitted from the one or the plurality of light sources (5, 5A, 5D) and blocking of the light;
one input unit (24) configured to receive inputs of operation instructions for the plurality of shutters (8A, 8B);
a storage unit (25) that stores operation conditions of the plurality of shutters (8A, 8B) corresponding to the operation instructions received by the input unit (24);
an operation controller (19A, 19B) configured to control operations of the plurality of shutters (8A, 8B); and
a controller (30) configured to acquire, from the storage unit (25), the operation conditions corresponding to the operation instructions received by the input unit (24), and to output instruction signals to the operation controller (19A, 19B) based on the acquired operation conditions in order to change conditions of the plurality of shutters (8A, 8B), wherein
one of the plurality of shutters (8A, 8B), and the other of the plurality of shutters (8A, 8B) or the one or the plurality of cube turrets (10, 10A, 10D) are arranged on a same illumination optical path,
wherein the plurality of shutters (8A, 8B) includes:
a first shutter (8A) arranged on the illumination optical path and built in the microscope main body (1); and
a second shutter (8B) arranged on the illumination optical path on which the first shutter (8A) is arranged, and attachable to and detachable from the microscope main body (1), wherein
the operation controller (19A, 19B) is configured to control each of the first (8A) and second (8B) shutters, and store speed parameters as opening and closing speed information of the first (8A) and second (8B) shutters in respective storage units (191A, 191B),
the controller (30) is configured to select one of the first (8A) and second (8B) shutters that has an opening and closing speed larger than that of the other of the first (8A) and second (8B) shutters, based on the speed parameters of the first (8A) and second (8B) shutters stored in the storage units (191A, 191B), and to register the selected shutter as a high speed shutter in the storage unit (25),
and wherein
the controller (30) is further configured to cause only a selected one of the first (8A) and second (8B) shutters, that is registered as the high speed shutter in the storage unit (25), to perform the opening or closing operation according to the operation instructions by the input unit (24), and to cause the other of the first (8A) and second (8B) shutters that is not selected to be kept open.

## Patentansprüche

1. Mikroskopvorrichtung (500), umfassend:
einen Objekttisch (3), auf dem eine Probe (2) zu platzieren ist;
eine Mikroskophauptkörpereinheit (1), die den Objekttisch (3) hält;
eine Objektivlinse (4), die unterhalb der Probe (2) angeordnet ist;
eine oder eine Mehrzahl Lichtquellen (5, 5A, 5D), die dazu ausgelegt ist, Licht zum Anregen der Probe (2) abzugeben;
einen oder eine Mehrzahl Würfelrevolver (10, 10A, 10D), die eine Mehrzahl fluoreszenter Würfel hält und dazu ausgelegt ist, die Mehrzahl fluoreszenter Würfel wahlweise an einem optischen Beobachtungsweg anzuordnen;
ein Abbildungselement (7), das dazu ausgelegt ist, ein Bild der Probe (2) zu erfassen;
eine Mehrzahl Blenden (8A, 8B), die an einem optischen Beleuchtungsweg angeordnet und dazu ausgelegt sind, zwischen der Bestrahlung der Probe (2) mit dem von der einen oder der Mehrzahl Lichtquellen (5, 5A, 5D) abgegebenen Licht und dem Blockieren des Lichts zu wechseln;
eine Eingabeeinheit (24), die dazu ausgelegt ist, Eingaben der Bedienanweisungen für die Mehrzahl Blenden (8A, 8B) zu empfangen;
eine Speichereinheit (25), die Bedienbedingungen der Mehrzahl Blenden (8A, 8B), die den von der Eingabeeinheit (24) empfangenen Bedienanweisungen entsprechen, speichert;
eine Bediensteuerung (19A, 19B), die dazu ausgelegt ist, Bedienungen der Mehrzahl Blenden (8A, 8B) zu steuern; und
eine Steuerung (30), die dazu ausgelegt ist, aus der Speichereinheit (25) die Bedienbedingungen, die den von der Eingabeeinheit (24) empfangenen Bedienanweisungen entsprechen, zu erfassen, und Anweisungssignale an die Bediensteuerung (19A, 19B) basierend auf den erfassten Bedienbedingungen auszugeben, um die Bedingungen der Mehrzahl Blenden (8A, 8B) zu ändern, wobei
eine der Mehrzahl Blenden (8A, 8B) und die andere der Mehrzahl Blenden (8A, 8B) oder die eine oder die Mehrzahl Würfelrevolver (10, 10A, 10D) auf demselben optischen Beleuchtungsweg angeordnet sind,
wobei die Mehrzahl Blenden (8A, 8B) umfasst:
eine erste Blende (8A), die an dem optischen Beleuchtungsweg angeordnet und in den Mikroskophauptkörper (1) eingebaut ist; und
eine zweite Blende (8B), die an dem optischen Beleuchtungsweg angeordnet ist, an dem die erste Blende (8A) angeordnet ist, und die an den Mikroskophauptkörper (1) angebracht und davon gelöst werden kann, wobei
die Bediensteuerung (19A, 19B) dazu ausgelegt ist, jede der ersten (8A) und zweiten (8B) Blende zu steuern und Geschwindigkeitsparameter als Öffnungs- und Schließinformation der ersten (8A) und zweiten (8B) Blende in entsprechenden Speichereinheiten (191A, 191B) zu speichern,
die Steuerung (30) dazu ausgelegt ist, eine der ersten (8A) und zweiten (8B) Blende auszuwählen, die eine Öffnungs- und Schließgeschwindigkeit aufweist, die größer ist als die der anderen der ersten (8A) und zweiten (8B) Blende, basierend auf den Geschwindigkeitsparametern der ersten (8A) und der zweiten (8B) Blende, die in den Speichereinheiten (191A, 191B) gespeichert sind, und die ausgewählte Blende als eine Hochgeschwindigkeitsblende in der Speichereinheit (25) zu registrieren,
und wobei
die Steuerung (30) ferner dazu ausgelegt ist, zu bewirken, dass nur eine ausgewählte der ersten (8A) und der zweiten (8B) Blende, die als die Hochgeschwindigkeitsblende in der Speichereinheit (25) registriert ist, den Öffnungs- oder Schließvorgang nach den Bedienanweisungen der Eingabeeinheit (24) durchführt, und zu bewirken, dass die andere der ersten (8A) und der zweiten (8B) Blende, die nicht ausgewählt ist, offen bleibt.

## Revendications

1. Appareil de microscopie (500) comprenant :
une platine (3) sur laquelle un échantillon (2) est configuré pour être placé ;
une unité de corps principal de microscope (1) qui porte la platine (3) ;
un objectif (4) disposé sous l'échantillon (2) ;
une ou plusieurs sources lumineuses (5, 5A, 5D) configurées pour émettre une lumière destinée à exciter l'échantillon (2) ;
une ou plusieurs tourelles à cubes (10, 10A, 10D) qui portent une pluralité de cubes fluorescents et sont configurées pour agencer la pluralité de cubes fluorescents de manière sélective sur un trajet optique d'observation ;
un élément d'imagerie (7) configuré pour capturer une image de l'échantillon (2) ;
une pluralité d'obturateurs (8A, 8B) agencés sur un trajet optique d'éclairage et configurés pour commuter entre une irradiation de l'échantillon (2) avec la lumière émise par l'une ou la pluralité de sources lumineuses (5, 5A, 5D) et le blocage de la lumière ;
une unité d'entrée (24) configurée pour recevoir des entrées d'instruction de fonctionnement pour la pluralité d'obturateurs (8A, 8B) ;
une unité de mémorisation (25) qui mémorise des conditions de fonctionnement de la pluralité d'obturateurs (8A, 8B) correspondant aux instructions de fonctionnement reçues par l'unité d'entrée (24) ;
un contrôleur de fonctionnement (19A, 19B) configuré pour commander les fonctionnements de la pluralité d'obturateurs (8A, 8B) ; et
un contrôleur (30) configuré pour acquérir, de l'unité de mémorisation (25), les conditions de fonctionnement correspondant aux instructions de fonctionnement reçues par l'unité d'entrée (24), et pour délivrer en sortie des signaux d'instruction au contrôleur de fonctionnement (19A, 19B) sur la base des conditions de fonctionnement acquises afin de modifier des conditions de la pluralité d'obturateurs (8A, 8B), dans lequel :
l'un de la pluralité d'obturateurs (8A, 8B), et l'autre de la pluralité d'obturateurs (8A, 8B) ou l'une de l'une ou la pluralité de tourelles à cubes (10, 10A, 10D) sont agencés sur un même trajet optique d'éclairage,
dans lequel la pluralité d'obturateurs (8A, 8B) comprend :
un premier obturateur (8A) disposé sur le trajet optique d'éclairage et construit dans le corps principal de microscope (1) ; et
un second obturateur (8B) disposé sur le trajet optique d'éclairage sur lequel le premier obturateur (8A) est agencé, et apte à être attaché au corps principal de microscope (1) et apte à être détaché de celui-ci, dans lequel :
le contrôleur de fonctionnement (19A, 19B) est configuré pour commander chacun des premier (8A) et second (8B) obturateurs, et mémoriser des paramètres de vitesse en tant qu'informations de vitesse d'ouverture et de fermeture des premier (8A) et second (8B) obturateurs dans les unités de mémorisation respectives (191A, 191B),
le contrôleur (30) est configuré pour sélectionner l'un des premier (8A) et second (8B) obturateurs qui a une vitesse d'ouverture et de fermeture plus grande que celle de l'autre des premier (8A) et second (8B) obturateurs, sur la base des paramètres de vitesse des premier (8A) et second (8B) obturateurs mémorisés dans les unités de mémorisation (191A, 191B), et pour enregistrer l'obturateur sélectionné en tant qu'obturateur à haute vitesse dans l'unité de mémorisation (25),
et dans lequel
le contrôleur (30) est en outre configuré pour amener uniquement l'un sélectionné des premier (8A) et second (8B) obturateurs, qui est enregistré en tant qu'obturateur à haute vitesse dans l'unité de mémorisation (25), à réaliser l'opération d'ouverture ou de fermeture selon les instructions de fonctionnement par l'unité d'entrée (24), et pour amener l'autre des premier (8A) et second (8B) obturateurs qui n'est pas sélectionné à être maintenu ouvert.
